# EUROPEAN PATENT APPLICATION

(11) **EP 4 716 328 A1**
(43) Date of publication of application: **25.03.2026**
(21) Application number: 24818551.4
(22) Date of filing: 30.05.2024
(51) Int. Cl.: H04W 72/02

(54) **SEMANTIC COMMUNICATION METHOD AND APPARATUS**

(30) Priority: 08.06.2023 CN 202310682442
(71) Applicant: Huawei Technologies Co., Ltd., Shenzhen, Guangdong 518129 (CN)
(72) Inventor: XU, Hao, Shenzhen, Guangdong 518129 (CN); CHEN, Weichao, Shenzhen, Guangdong 518129 (CN); ZENG, Qinghai, Shenzhen, Guangdong 518129 (CN); QIN, Yi, Shenzhen, Guangdong 518129 (CN); PANG, Xu, Shenzhen, Guangdong 518129 (CN); FU, Yu, Shenzhen, Guangdong 518129 (CN)
(74) Representative: Isarpatent
(86) International application number: PCT/CN2024/096232
(87) International publication number: WO 2024/251019

(57) **Abstract**

A semantic communication method and apparatus are provided, to provide a computing resource and a storage resource for two communication parties of semantic communication, ensure normal execution of semantic communication, ensure user privacy, and improve system security. The method includes: A first terminal device sends a resource configuration request to an access and mobility management function network element. The access and mobility management function network element sends a response message to the first terminal device, to indicate whether a semantic library is available. When the semantic library is available, the access and mobility management function network element sends a resource configuration indication to a resource controller, to perform resource reservation and resource instantiation configuration. When the semantic library is available, the first terminal device sends first information to the access and mobility management function network element. The first information carries a key required for configuring a computing environment. The access and mobility management function network element sends the first information and resource configuration information to a reasoning plane function network element, and the reasoning plane function network element initializes a trusted execution environment.

## Description

This application claims priority to Chinese Patent Application No. 202310682442.8, filed with the China National Intellectual Property Administration on June 8, 2023 and entitled "SEMANTIC COMMUNICATION METHOD AND APPARATUS", which is incorporated herein by reference in its entirety.

### TECHNICAL FIELD

This application relates to the communication field, and in particular, to a semantic communication method and apparatus.

### BACKGROUND

Semantic communication is communication between different agents for the purpose of "conveying meanings". The "agent" herein may be a human, an intelligent machine, or even another creature. Semantic communication essentially aims to exchange information. Semantic communication aims to accurately transfer semantic information between two communication parties instead of pursuing fidelity of original data or signals.

In object-based semantic communication, two communication parties need to depend on a shared semantic library to consistently compress and restore communication content, to reduce communication bandwidth overheads. The semantic library is a group of parameters and models, and a mapping relationship can be established between the semantic library and the communication content. Usually, a transmitter may perform object-based processing, namely, semantic extraction, on raw data based on the semantic library, and send object-based semantics to a receiver. Then, the receiver renders and combines the object-based semantics and a corresponding model based on the semantic library, to obtain restored content.

The foregoing process requires computational power and storage support. How to provide a computing resource and a storage resource for the two communication parties of semantic communication is a technical problem to be urgently resolved currently.

### SUMMARY

This application provides a semantic communication method and apparatus, to provide a computing resource and a storage resource for two communication parties of semantic communication, and ensure user privacy while ensuring normal execution of semantic communication, thereby improving system security.

According to a first aspect, a semantic communication method is provided, applied to a first terminal device, including: sending a resource configuration request to an access and mobility management function network element, where the resource configuration request is used to request to configure a semantic communication resource between the first terminal device and a second terminal device; receiving a response message from the access and mobility management function network element, where the response message indicates whether a semantic library is available; and sending first information to the access and mobility management function network element when the semantic library is available, where the first information carries a key required for configuring a computing environment and a session identifier between the first terminal device and the second terminal device.

In a possible implementation, the method may be performed by the first terminal device, or may be performed by a circuit or a chip in the first terminal device. This is not limited in this embodiment of this application.

In a possible implementation, the access and mobility management function network element may be referred to as an AMF (access and mobility management function) for short.

In the semantic communication method in this application, a terminal device that performs semantic communication sends the resource configuration request to the access and mobility management function network element, to request to configure the semantic communication resource. The access and mobility management function network element sends a resource configuration indication to a resource controller based on the resource configuration request, to perform resource reservation and a resource instantiation configuration. The terminal device sends the first information to the access and mobility management function network element. The first information carries the key required for configuring the computing environment. The access and mobility management function network element sends the first information and resource configuration information to a reasoning plane function network element, and the reasoning plane function network element initializes a trusted execution environment by using a key of the terminal device. The reasoning plane function network element is introduced, to provide a required computing resource and a required storage resource for two communication parties of semantic communication through trusted privacy protection, and content of a user is protected and processed in a trusted execution environment (trusted execution environment, TEE). In this way, user privacy is ensured while ensuring normal execution of semantic communication, thereby improving system security and improving user experience.

The resource configuration information includes an identifier of a configured computing node and/or an identifier of a configured storage node.

In the foregoing implementation, the access and mobility management function network element may perform a query after receiving the resource configuration request from the first terminal device, and then perform a subsequent procedure when the semantic library is available. If the semantic library is unavailable, after sending the response message to the first terminal device, the access and mobility management function network element may end the current procedure, and no longer perform a subsequent resource configuration. In addition, after receiving the response message and determining that the semantic library is unavailable, the first terminal device also ends the current procedure, and does not send a subsequent message (namely, the first information). In this way, the subsequent procedure is performed when it is ensured that the semantic library is available, which helps ensure normal execution of subsequent semantic communication, and avoids a case in which when a network side has configured a resource for the terminal device but the semantic library is unavailable, subsequent semantic communication cannot be normally performed, and consequently a resource waste is caused.

In another possible implementation, the access and mobility management function network element may not perform a query after receiving the resource configuration request from the first terminal device, and the first terminal device may continue to send the first information after sending the resource configuration status. In this way, resource configuration efficiency can be improved, and semantic communication efficiency can be improved.

With reference to the first aspect, in some implementations of the first aspect, the method further includes: receiving a data request from a reasoning plane function network element, where the data request is used to request to transmit data; and sending an encrypted data flow to the reasoning plane function network element based on the data request.

With reference to the first aspect, in some implementations of the first aspect, the data request carries the session identifier and an identifier of the semantic library, and the encrypted data flow carries the session identifier.

With reference to the first aspect, in some implementations of the first aspect, the method further includes: receiving semantic key information and the session identifier from the reasoning plane function network element; and sending the semantic key information and the session identifier to a user plane function network element.

In a possible implementation, the user plane function network element may be referred to as a UPF (user plane function) for short.

In the foregoing implementation, the first terminal device is a sending device of current semantic communication, and the second terminal device is a receiving device of current semantic communication.

In a possible implementation, the reasoning plane function network element obtains the semantic key information, and may directly send the semantic key information and the session identifier to the user plane function network element.

In another possible implementation, the reasoning plane function network element obtains the semantic key information, and may first send the semantic key information and the session identifier to the first terminal device, and then the first terminal device sends the semantic key information and the session identifier to the user plane function network element. In this case, the reasoning plane function network element may perform a part of semantic extraction operations, and send the semantic key information to the first terminal device. Then, the first terminal device performs another part of semantic extraction operations, and the first terminal device may send summarized semantic key information to the user plane function network element.

With reference to the first aspect, in some implementations of the first aspect, the method further includes: receiving semantic restoration information and the session identifier from a reasoning plane function network element.

In the foregoing implementation, the second terminal device is a sending device of current semantic communication, and the first terminal device is a receiving device of current semantic communication.

With reference to the first aspect, in some implementations of the first aspect, the method further includes: sending an end notification to the reasoning plane function network element. The end notification indicates that semantic communication between the first terminal device and the second terminal device ends.

It should be understood that, that a semantic processing procedure ends means that a current semantic session ends. To be specific, there is no subsequent data flow that is from the first terminal device and that has a session identifier the same as the foregoing session identifier. According to a processing manner in which the first terminal device sends the end notification, a related resource can be released earlier, so that the related resource is used for other communication, thereby improving resource utilization.

With reference to the first aspect, in some implementations of the first aspect, the resource configuration request carries at least one of the following: a semantic communication type between the first terminal device and the second terminal device; or description information of a computing resource and a storage resource that are required for performing semantic communication between the first terminal device and the second terminal device; or an identifier of the first terminal device and an identifier of the second terminal device.

The semantic communication type may be, for example, any one of joint source and channel coding (namely, a feature stream), object-based semantic extraction, multimedia encoding/decoding, task segmentation, and the like.

The description information of the computing resource and the storage resource may include, for example, a computational power type, a standard computational power measurement unit, a delay requirement, or a storage capacity.

The identifier of the terminal device may be an identity (identity, ID) of the terminal device or a public key ID.

In a possible implementation, the identifier of the first terminal device is an ID of the first terminal device, and the identifier of the second terminal device is an ID of the second terminal device.

In another possible implementation, the identifier of the first terminal device is a public key ID of the first terminal device, and the identifier of the second terminal device is a public key ID of the second terminal device.

It should be understood that the public key ID is an ID derived based on a public key. The public key ID of the first terminal device may be, for example, a distributed identity or a blockchain address of the first terminal device, and may be specifically, for example, Hash (PKu1). PKu1 is a public key of the first terminal device, and Hash (PKu1) represents a value obtained by performing a hash operation on PKu1.

With reference to the first aspect, in some implementations of the first aspect, the resource configuration request carries a first public key in a first public-private key pair used for semantic communication; and the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment.

It should be understood that the resource category information may be a category obtained through classification based on a resource type, for example, a computing resource or a storage resource; or may be a category obtained through classification based on a computational power, for example, a central processing unit (center processing unit, CPU), a graphics processing unit (graphics processing unit, GPU), or a heterogeneous processor. This is not limited in this embodiment of this application.

One public-private key pair may correspond to one resource category, or may correspond to a plurality of resource categories. This is not limited in this embodiment of this application.

According to the foregoing method, different public keys (namely, the second public key) used to initialize the TEE can be configured for different computing instances. In this way, the trusted execution environment can be initialized at a finer granularity, and system security is enhanced.

With reference to the first aspect, in some implementations of the first aspect, the method further includes: generating the first public-private key pair, where the first public-private key pair includes the first public key and the first private key; and generating a plurality of second public-private key pairs, where each of the plurality of second public-private key pairs includes the second public key and a second private key.

It should be understood that, usually, the public key is sent by a generator to another device for publication, and the private key is reserved by the generator for subsequent verification or encryption. For example, the first terminal device may encrypt the second public key by using the first private key, and the first terminal device may subsequently access the TEE by using the second private key.

According to a second aspect, another semantic communication method is provided, applied to an access and mobility management function network element. The method includes: receiving a resource configuration request from a first terminal device, where the resource configuration request is used to request to configure a semantic communication resource between the first terminal device and a second terminal device; sending a resource configuration indication to a resource controller in response to the resource configuration request, where the resource configuration indication indicates to perform resource reservation and resource instantiation configuration; receiving resource configuration information from the resource controller, where the resource configuration information indicates a configured resource; receiving first information from the first terminal device, where the first information carries a key required for configuring a computing environment and a session identifier between the first terminal device and the second terminal device; and sending second information to a reasoning plane function network element, where the second information includes the resource configuration information, the key required for configuring the computing environment, and the session identifier.

In a possible implementation, the method may be performed by the access and mobility management function network element, or may be performed by a circuit or a chip in the access and mobility management function network element. This is not limited in this embodiment of this application.

In a possible implementation, the access and mobility management function network element may be referred to as an AMF (access and mobility management function) for short.

With reference to the second aspect, in some implementations of the second aspect, the resource configuration information includes an identifier of a configured computing node and/or an identifier of a configured storage node.

With reference to the second aspect, in some implementations of the second aspect, the method further includes: sending a query request to a semantic library storage device, where the query request is used to request to query a semantic library of the first terminal device and a semantic library of the second terminal device; receiving a query response from the semantic library storage device, where the query response indicates whether the semantic library is available; and sending a response message to the first terminal device, where the response message indicates whether the semantic library is available.

With reference to the second aspect, in some implementations of the second aspect, sending the resource configuration indication to the resource controller in response to the resource configuration request includes: sending the resource configuration indication to the resource controller based on the resource configuration request when the semantic library is available.

With reference to the second aspect, in some implementations of the second aspect, the resource configuration request carries a first public key in a first public-private key pair used for semantic communication; the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment; and the second information carries the plurality of second public keys and resource category information corresponding to the plurality of second public keys; and the method further includes: separately decrypting the plurality of first ciphertexts by using the first public key, to obtain the plurality of second public keys.

In this way, different public keys (namely, the second public key) used to initialize the TEE can be configured for different computing instances. In this way, the trusted execution environment can be initialized at a finer granularity, and system security is enhanced.

According to a third aspect, still another semantic communication method is provided, applied to a reasoning plane function network element. The method includes: receiving second information from an access and mobility management function network element, where the second information includes resource configuration information for performing semantic communication between a first terminal device and a second terminal device, a key required for configuring a computing environment, and a session identifier between the first terminal device and the second terminal device, and the resource configuration information indicates a configured resource; and initializing a trusted execution environment TEE of a computing node and/or a TEE of a storage node based on the second information by using the key.

In a possible implementation, the method may be performed by the reasoning plane function network element, or may be performed by a circuit or a chip in the reasoning plane function network element. This is not limited in this embodiment of this application.

With reference to the third aspect, in some implementations of the third aspect, the resource configuration information includes an identifier of a configured computing node and/or an identifier of a configured storage node.

With reference to the third aspect, in some implementations of the third aspect, the second information carries a plurality of second public keys and resource category information corresponding to the plurality of second public keys; and initializing the trusted execution environment TEE of the computing node and/or the TEE of the storage node based on the second information by using the key includes: determining, based on the second information, a computing instance corresponding to each of the plurality of second public keys, and a computing node and/or a storage node corresponding to the computing instance; and sending third information to a resource controller, where the third information includes information indicating the plurality of second public keys and computing instance information corresponding to each second public key, and the computing instance information includes an identifier of the computing node and/or an identifier of the storage node.

In this way, different public keys (namely, the second public key) used to initialize the TEE can be configured for different computing instances. In this way, the trusted execution environment can be initialized at a finer granularity, and system security is enhanced.

With reference to the third aspect, in some implementations of the third aspect, the information indicating the plurality of second public keys is a plurality of third ciphertexts, and the plurality of third ciphertexts are obtained by separately encrypting the plurality of second public keys by using a third private key in a third public-private key pair.

The third public-private key pair between the reasoning plane function network element and the resource controller is introduced, to avoid leakage of the second key. In this way, an information transfer process between the reasoning plane function network element and the resource controller is more secure, thereby improving security of an entire resource configuration process.

With reference to the third aspect, in some implementations of the third aspect, the method further includes: generating the third public-private key pair, where the third public-private key pair includes a third public key and the third private key; and sending the third public key to the resource controller.

With reference to the third aspect, in some implementations of the third aspect, the method further includes: receiving a confirmation message from the resource controller. The confirmation message indicates that the TEE is initialized.

With reference to the third aspect, in some implementations of the third aspect, the method further includes: sending a data request to the first terminal device, where the data request is used to request to transmit data; receiving an encrypted data flow from the first terminal device; performing semantic extraction on the data flow based on a semantic library of the first terminal device and a semantic library of the second terminal device, to obtain semantic key information; and sending the semantic key information and the session identifier to a user plane function network element.

With reference to the third aspect, in some implementations of the third aspect, the method further includes: receiving semantic key information and the session identifier from a user plane function network element; performing semantic restoration on the semantic key information based on a semantic library of the first terminal device and a semantic library of the second terminal device, to obtain semantic restoration information; and sending the semantic restoration information and the session identifier to the first terminal device.

In this embodiment of this application, a semantic processing (namely, semantic extraction or semantic restoration) operation is performed by the reasoning plane function network element in the TEE of the foregoing resource node. In this way, content of a user is processed in a trusted environment. In this way, the terminal device does not need to store the semantic library, and the terminal device does not need to perform the semantic processing operation, thereby saving memory of the terminal device and reducing a load of the terminal device. In addition, the content of the user is processed in the trusted environment, to ensure user privacy while ensuring normal execution of semantic communication.

With reference to the third aspect, in some implementations of the third aspect, the method further includes: receiving an end notification from the first terminal device, where the end notification indicates that semantic communication between the first terminal device and the second terminal device ends; and sending a resource release notification to the resource controller.

In this way, a related resource can be released earlier, so that the related resource is used for other communication, thereby improving resource utilization.

According to a fourth aspect, still another semantic communication method is provided, applied to a resource controller. The method includes: receiving a resource configuration indication from an access and mobility management function network element, where the resource configuration indication indicates to perform resource reservation and resource instantiation configuration; performing resource reservation and resource instantiation configuration based on the resource configuration indication; and sending resource configuration information to the access and mobility management function network element, where the resource configuration information indicates a configured resource.

In a possible implementation, the method may be performed by the resource controller, or may be performed by a circuit or a chip in the resource controller. This is not limited in this embodiment of this application.

With reference to the fourth aspect, in some implementations of the fourth aspect, the method further includes: receiving third information from a reasoning plane function network element, where the third information includes information indicating a plurality of second public keys required for configuring a computing environment and computing instance information corresponding to each of the plurality of second public keys, and the computing instance information includes an identifier of a computing node and/or an identifier of a storage node; and initializing a trusted execution environment TEE of the computing node and/or a TEE of the storage node based on the third information by using the plurality of second public keys.

In this way, different public keys (namely, the second public key) used to initialize the TEE can be configured for different computing instances. In this way, the trusted execution environment can be initialized at a finer granularity, and system security is enhanced.

With reference to the fourth aspect, in some implementations of the fourth aspect, the information indicating the plurality of second public keys required for configuring the computing environment is a plurality of third ciphertexts, and the plurality of third ciphertexts are obtained by separately encrypting the plurality of second public keys by using a third private key in a third public-private key pair; and the method further includes: receiving a third public key from the reasoning plane function network element; and separately decrypting the plurality of third ciphertexts by using the third public key, to obtain the plurality of second public keys.

The third public-private key pair between the reasoning plane function network element and the resource controller is introduced, to avoid leakage of the second key. In this way, an information transfer process between the reasoning plane function network element and the resource controller is more secure, thereby improving security of an entire resource configuration process.

With reference to the fourth aspect, in some implementations of the fourth aspect, the method further includes: receiving a resource release notification from the reasoning plane function network element; and performing a resource release based on the resource release notification.

In this way, a related resource can be released earlier, so that the related resource is used for other communication, thereby improving resource utilization.

According to a fifth aspect, another semantic communication method is provided, applied to a system including an access and mobility management function network element, a reasoning plane function network element, and a resource controller. The method includes: The access and mobility management function network element receives a resource configuration request from a first terminal device. The resource configuration request is used to request to configure a semantic communication resource between the first terminal device and a second terminal device. The access and mobility management function network element sends a resource configuration indication to the resource controller in response to the resource configuration request. The resource configuration indication indicates to perform resource reservation and resource instantiation configuration. The resource controller receives the resource configuration indication, and performs resource reservation and resource instantiation configuration based on the resource configuration indication. The resource controller sends resource configuration information to the access and mobility management function network element. The resource configuration information indicates a configured resource. The access and mobility management function network element receives the resource configuration information. The access and mobility management function network element receives first information from the first terminal device. The first information carries a key required for configuring a computing environment and a session identifier between the first terminal device and the second terminal device. The access and mobility management function network element sends second information to the reasoning plane function network element. The second information includes the resource configuration information, the key required for configuring the computing environment, and a session identifier. The reasoning plane function network element receives the second information, and initializes a trusted execution environment TEE of a computing node and/or a TEE of a storage node based on the second information by using the key.

With reference to the fifth aspect, in some implementations of the fifth aspect, the resource configuration information includes an identifier of a configured computing node and/or an identifier of a configured storage node.

With reference to the fifth aspect, in some implementations of the fifth aspect, the method further includes: The access and mobility management function network element sends a query request to a semantic library storage device. The query request is used to request to query a semantic library of the first terminal device and a semantic library of the second terminal device. The access and mobility management function network element receives a query response from the semantic library storage device. The query response indicates whether the semantic library is available. The access and mobility management function network element sends a response message to the first terminal device. The response message indicates whether the semantic library is available.

With reference to the fifth aspect, in some implementations of the fifth aspect, that the access and mobility management function network element sends the resource configuration indication to the resource controller in response to the resource configuration request includes: The access and mobility management function network element sends the resource configuration indication to the resource controller based on the resource configuration request when the semantic library is available.

With reference to the fifth aspect, in some implementations of the fifth aspect, the resource configuration request carries a first public key in a first public-private key pair used for semantic communication; the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment; and the second information carries the plurality of second public keys and resource category information corresponding to the plurality of second public keys. The method further includes: The access and mobility management function network element separately decrypts the plurality of first ciphertexts by using the first public key, to obtain the plurality of second public keys. That the reasoning plane function network element initializes the trusted execution environment TEE of the computing node and/or the TEE of the storage node based on the second information by using the key includes: The reasoning plane function network element determines, based on the second information, a computing instance corresponding to each of the plurality of second public keys, and a computing node and/or a storage node corresponding to the computing instance. The reasoning plane function network element sends third information to the resource controller. The third information includes information indicating the plurality of second public keys and computing instance information corresponding to each second public key, and the computing instance information includes an identifier of the computing node and/or an identifier of the storage node. The resource controller receives the third information, and initializes the trusted execution environment TEE of the computing node and/or the TEE of the storage node based on the third information by using the plurality of second public keys.

With reference to the fifth aspect, in some implementations of the fifth aspect, the information indicating the plurality of second public keys is a plurality of third ciphertexts, and the plurality of third ciphertexts are obtained by separately encrypting the plurality of second public keys by using a third private key in a third public-private key pair.

With reference to the fifth aspect, in some implementations of the fifth aspect, the method further includes: The reasoning plane function network element generates the third public-private key pair. The third public-private key pair includes a third public key and the third private key. The reasoning plane function network element sends the third public key to the resource controller. Correspondingly, the resource controller receives the third public key, and separately decrypts the plurality of third ciphertexts by using the third public key, to obtain the plurality of second public keys.

With reference to the fifth aspect, in some implementations of the fifth aspect, the method further includes: The reasoning plane function network element receives an end notification from the first terminal device. The end notification indicates that semantic communication between the first terminal device and the second terminal device ends. The reasoning plane function network element sends a resource release notification to the resource controller. Correspondingly, the resource controller receives the resource release notification, and performs a resource release based on the resource release notification.

According to a sixth aspect, a semantic communication apparatus is provided, configured to perform the method according to any possible implementation of the first aspect to the fourth aspect. Specifically, the apparatus includes a module configured to perform the method according to any possible implementation of the first aspect to the fourth aspect.

According to a seventh aspect, this application provides another semantic communication apparatus, including a processor. The processor is coupled to a storage and may be configured to execute instructions in the storage, to implement the method according to any possible implementation of the first aspect to the fourth aspect. Optionally, the semantic communication apparatus further includes the storage. Optionally, the semantic communication apparatus further includes a communication interface, and the processor is coupled to the communication interface.

In an implementation, the semantic communication apparatus is a terminal device. When the semantic communication apparatus is the terminal device, the communication interface may be a transceiver or an input/output interface.

In another implementation, the semantic communication apparatus is a chip disposed in the terminal device. When the semantic communication apparatus is the chip disposed in the terminal device, the communication interface may be an input/output interface.

In an implementation, the semantic communication apparatus is a network device (for example, a network side device such as the foregoing access and mobility management function network element, reasoning plane function network element, or resource controller). When the semantic communication apparatus is the network device, the communication interface may be a transceiver or an input/output interface.

In another implementation, the semantic communication apparatus is a chip disposed in the network device. When the semantic communication apparatus is the chip disposed in the network device, the communication interface may be an input/output interface.

According to an eighth aspect, a processor is provided, including an input circuit, an output circuit, and a processing circuit. The processing circuit is configured to: receive a signal through the input circuit, and transmit a signal through the output circuit, so that the processor performs the method according to any possible implementation of the first aspect to the fourth aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, the input circuit and the output circuit may be a same circuit, and the circuit serves as the input circuit and the output circuit at different moments. Specific implementations of the processor and the various circuits are not limited in this embodiment of this application.

According to a ninth aspect, a processing apparatus is provided. The processing apparatus includes a processor and a storage. The processor is configured to read instructions stored in the storage, and may receive a signal through a receiver, and transmit a signal through a transmitter, to perform the method according to any possible implementation of the first aspect to the fourth aspect.

Optionally, there are one or more processors, and there are one or more memories.

Optionally, the storage may be integrated with the processor, or the storage and the processor are separately disposed.

In a specific implementation process, the storage may be a non-transitory (non-transitory) memory, such as a read-only memory (read-only memory, ROM). The storage and the processor may be integrated into one chip, or may be separately disposed in different chips. A type of the storage and a manner in which the storage and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processing apparatus according to the ninth aspect may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a storage. The storage may be integrated into the processor, or may be located outside the processor, and exists independently.

According to a tenth aspect, a semantic communication system is provided, including an access and mobility management function network element, a reasoning plane function network element, and a resource controller. The access and mobility management function network element, the reasoning plane function network element, and the resource controller are respectively configured to implement the method according to any possible implementation of the second aspect to the fourth aspect.

With reference to the tenth aspect, in some implementations of the tenth aspect, the system further includes a first terminal device, another device (for example, a user plane function network element), or the like.

According to an eleventh aspect, a computer program product is provided. The computer program product includes a computer program (which may also be referred to as code or instructions). When the computer program is run, a computer is enabled to perform the method according to any possible implementation of the first aspect to the fourth aspect.

According to a twelfth aspect, a computer-readable storage medium is provided. The computer-readable storage medium stores a computer program (which may also be referred to as code or instructions). When the computer program is run on a computer, the computer is enabled to perform the method according to any possible implementation of the first aspect to the fourth aspect.

### BRIEF DESCRIPTION OF DRAWINGS

FIG. 1 is a diagram of a communication system applicable to embodiments of this application;
FIG. 2 is a schematic flowchart of a semantic communication method according to an embodiment of this application;
FIG. 3 is a diagram of a semantic communication process according to an embodiment of this application;
FIG. 4 is a schematic flowchart of a semantic communication method according to an embodiment of this application;
FIG. 5A and FIG. 5B are a schematic flowchart of another semantic communication method according to an embodiment of this application;
FIG. 6 is a block diagram of a semantic communication apparatus according to an embodiment of this application;
FIG. 7 is a block diagram of another semantic communication apparatus according to an embodiment of this application; and
FIG. 8 is a block diagram of still another semantic communication apparatus according to an embodiment of this application.

### DESCRIPTION OF EMBODIMENTS

The following describes technical solutions of this application with reference to accompanying drawings.

To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In addition, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. The character "/" usually indicates an "or" relationship between the associated objects. At least one of the following items (pieces) or a similar expression thereof indicates any combination of these items, including a single item (piece) or any combination of a plurality of items (pieces). For example, at least one of a, b, and c may represent a, or b, or c, or a and b, or a and c, or b and c, or a, b, and c, where a, b, and c may be single, or may be plural.

Technical solutions in embodiments of this application may be applied to various communication systems such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, a new radio (new radio, NR) system, and a future evolved communication system, for example, a 6th generation (6th generation, 6G) system.

It should be further understood that the technical solutions in embodiments of this application may be further applied to various communication systems based on a non-orthogonal multiple access technology, for example, a sparse code multiple access (sparse code multiple access, SCMA) system. Certainly, SCMA may also be referred to as another name in the communication field. Further, the technical solutions in embodiments of this application may be applied to a multi-carrier transmission system that uses the non-orthogonal multiple access technology, for example, an orthogonal frequency division multiplexing (orthogonal frequency division multiplexing, OFDM) system, a filter bank multi-carrier (filter bank multi-carrier, FBMC) system, a generalized frequency division multiplexing (generalized frequency division multiplexing, GFDM) system, or a filtered orthogonal frequency division multiplexing (filtered-OFDM, F-OFDM) system that uses the non-orthogonal multiple access technology.

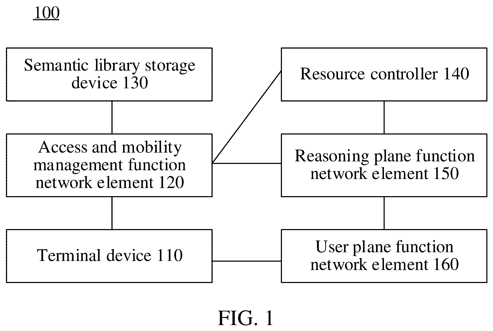

For ease of understanding of embodiments of this application, a communication system applicable to embodiments of this application is first described with reference to FIG. 1.

FIG. 1 is a diagram of a communication system 100 applicable to embodiments of this application. As shown in FIG. 1, the communication system 100 may include a terminal device 110, an access and mobility management function network element 120, a semantic library storage device 130, a resource controller 140, a reasoning plane function network element 150, and a user plane function network element 160.

The access and mobility management function network element 120, the reasoning plane function network element 150, and the user plane function network element 160 are all network side devices corresponding to the terminal device 110, and provide services for the terminal device 110.

The access and mobility management function network element 120 is mainly configured to perform mobility management, access management, and the like. Specifically, the access and mobility management function network element 120 may be configured to implement another function other than session management in a mobility management entity (mobility management entity, MME) function, for example, a function such as lawful interception or access authorization (or authentication). In a possible implementation, the access and mobility management function network element may be referred to as an AMF (access and mobility management function) for short. However, this is not limited in embodiments of this application.

The reasoning plane function network element 150 is configured to perform a semantic extraction or semantic restoration operation, and may be referred to as an RPF (reasoning plane function) for short, or may be referred to as a computing plane function network element, a semantic plane function network element, or another name. This is not limited in embodiments of this application. The reasoning plane function network element 150 in this application may be a network element on an access network side, or may be a network element on a core network side. This is not limited in embodiments of this application.

The user plane function network element 160 may be used for packet routing and forwarding, quality of service (quality of service, QoS) processing of user plane data, or the like. In a possible implementation, the user plane function network element may be referred to as a UPF (user plane function) for short.

The semantic library storage device 130 is a device configured to store a semantic library. The semantic library storage device 130 may be one device, or may include a plurality of devices (for example, a blockchain device) that are deployed in a distributed manner. This is not limited in embodiments of this application. The semantic library storage device 130 may communicate with a network device (for example, the access and mobility management function network element 120).

The resource controller 140 is configured to control and manage network resources (including a computing resource and a storage resource). The access and mobility management function network element 120 and the reasoning plane function network element 150 may communicate with the resource controller 140, to configure a resource required for semantic communication in embodiments of this application.

Optionally, the communication system 100 may further include other network elements such as a session management function (session management function, SMF) network element, a policy control function (policy control function, PCF) network element, and a unified data management (unified data management, UDM) network element. This is not limited in embodiments of this application.

The terminal device in embodiments of this application may communicate with one or more core networks through a radio access network (radio access network, RAN), and the terminal device may be referred to as an access terminal, user equipment (user equipment, UE), a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN).

The terminal device in embodiments of this application communicates with a core network device through an access network device (not shown in FIG. 1). The access network device may be an evolved NodeB (evolved NodeB, eNB, or eNodeB) in an LTE system, or may be a radio controller in a cloud radio access network (cloud radio access network, CRAN) scenario. The network device may be a relay station, an access point, a vehicle-mounted device, a wearable device, a network device in a 5G network, a network device in a future evolved network, or the like. This is not limited in embodiments of this application. For example, the network device may be a gNB or a transmit/receive point (transmit/receive point, TRP or TP) in an NR system, one antenna panel or a group of antenna panels (including a plurality of antenna panels) of a base station in a 5G system, or a network node forming the gNB or the transmission point, for example, a baseband unit (BBU) or a distributed unit (distributed unit, DU).

It should be understood that the foregoing devices (for example, the access and mobility management function network element 120, the semantic library storage device 130, the resource controller 140, the reasoning plane function network element 150, and the user plane function network element 160) other than the terminal device may be collectively referred to as network devices.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

For ease of understanding, the following first describes semantic communication in embodiments of this application.

Semantic communication is communication between different agents for the purpose of "conveying meanings". The "agent" herein may be a human, an intelligent machine, or even another creature. Semantic communication essentially aims to exchange information. Semantic communication aims to accurately transfer semantic information between two communication parties instead of pursuing fidelity of original data or signals. The information is mainly transferred based on a principle of fidelity of signal waveforms or data bits, and a task of extracting and understanding information in a signal is handed over to a person. Costs are required from a signal transfer to information understanding. Transmission efficiency of transferring a large quantity of signals and a communication mode of directly understanding information need to be reconstructed.

In object-based semantic communication, two communication parties need to depend on a shared semantic library to consistently compress and restore communication content, to reduce communication bandwidth overheads. The semantic library is a group of parameters and models, and a mapping relationship can be established between the semantic library and the communication content. Usually, a transmitter may perform object-based processing, namely, semantic extraction, on raw data based on the semantic library, and send object-based semantics to a receiver. Then, the receiver renders and combines the object-based semantics and a corresponding model based on the semantic library, to obtain restored content.

The foregoing process requires computational power and storage support. In a current technology, a computing resource and a storage resource required for semantic communication can be obtained by accessing a corresponding application server, and a network cannot actively provide a computing resource or a storage resource for the two communication parties. Therefore, how to provide the computing resource and the storage resource for the two communication parties of semantic communication through the network is a technical problem that needs to be urgently resolved currently.

In view of this, this application provides a semantic communication method and apparatus. A terminal device that performs semantic communication sends the resource configuration request to the access and mobility management function network element, to request to configure the semantic communication resource. The access and mobility management function network element sends a resource configuration indication to a resource controller based on the resource configuration request, to perform resource reservation and a resource instantiation configuration. The terminal device sends the first information to the access and mobility management function network element. The first information carries the key required for configuring the computing environment. The access and mobility management function network element sends the first information and resource configuration information to a reasoning plane function network element, and the reasoning plane function network element initializes a trusted execution environment by using a key of the terminal device. The reasoning plane function network element is introduced, to provide a required computing resource and a required storage resource for two communication parties of semantic communication through trusted privacy protection, and content of a user is protected and processed in a trusted execution environment TEE. In this way, user privacy is ensured while ensuring normal execution of semantic communication, thereby improving system security and improving user experience.

The following describes in detail the semantic communication method and the semantic communication apparatus provided in this application with reference to the accompanying drawings.

It should be understood that the technical solutions of this application may be applied to a wireless communication system, for example, the communication system 100 shown in FIG. 1. If embodiments of this application are applied to the communication system 100 shown in FIG. 1, a first terminal device is equivalent to the terminal device 110 in FIG. 1.

For another example, the technical solutions of this application may be applied to an open radio access network (open radio access network, O-RAN) network. The first terminal device may be equivalent to a node in the O-RAN network, for example, a RAN intelligent controller (RAN intelligent controller, RIC) node, an open cloud (open cloud, O-Cloud) node, a service management orchestration (service management orchestration, SMO) node, an open eNB (open eNB, O-eNB), an open radio unit (open radio unit, O-RU), an open DU (open DU, O-DU), or an open CU (open CU, O-CU). This is not limited in embodiments of this application. For example, the technical solutions of this application may be applied to a scenario in which the RIC node interacts with an application.

For ease of description, the access and mobility management function network element is referred to as an AMF for short, and a user plane network element is referred to as a UPF for short below. However, it should be understood that the access and mobility management function network element and the user plane network element may alternatively have other names. This is not limited in embodiments of this application.

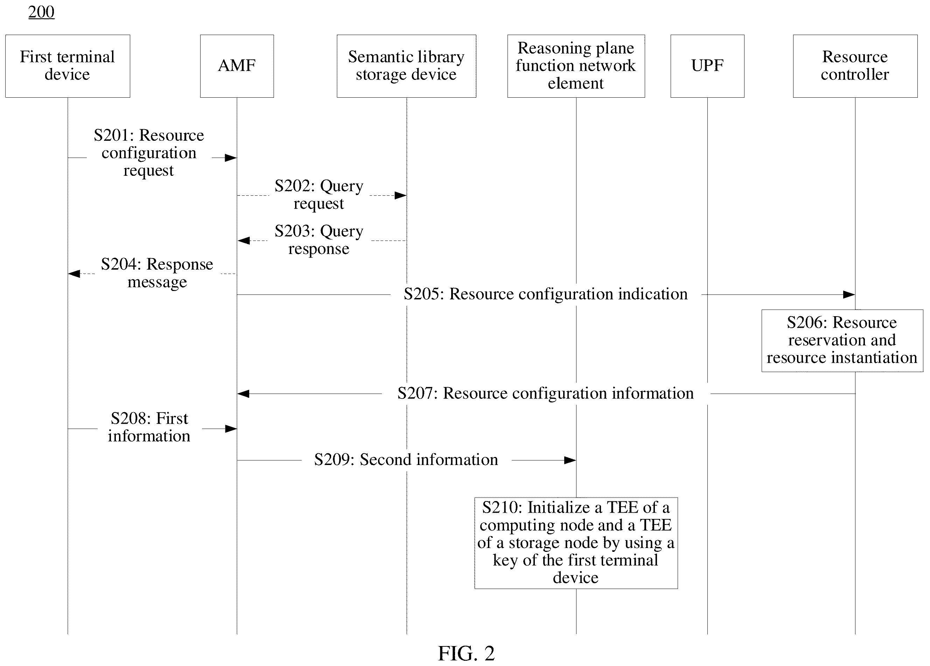

FIG. 2 is a schematic flowchart of a semantic communication method 200 according to an embodiment of this application. The method 200 includes the following steps.

S201: A first terminal device sends a resource configuration request to an AMF, where the resource configuration request is used to request to configure a semantic communication resource between the first terminal device and a second terminal device; and correspondingly, the AMF receives the resource configuration request.

S202: The AMF sends a query request to a semantic library storage device, where the query request is used to request to query a semantic library between the first terminal device and the second terminal device; and correspondingly, the semantic library storage device receives the query request.

It should be understood that the semantic library herein may be a private semantic library (namely, a semantic library created by the terminal device) between the first terminal device and the second terminal device, or may be a public semantic library specified between the first terminal device and the second terminal device. This is not limited in this embodiment of this application. Two communication parties that are different may establish different semantic libraries. During semantic communication, both semantic extraction on a transmit side (for example, including a sending device and a network device corresponding to the sending device) and semantic restoration on a receive side (for example, including a receiving device and a network device corresponding to the receiving device) depend on semantic libraries (for example, the semantic library between the first terminal device and the second terminal device) on a transmitter and a receiver.

S203: The semantic library storage device sends a query response to the AMF, where the query response indicates whether the semantic library is available; and correspondingly, the AMF receives the query response.

Information about the semantic library is stored in the semantic library storage device, and the AMF may determine, based on the query request and the query response, whether the semantic library between the first terminal device and the second terminal device is available. That the semantic library is available herein means that the semantic library exists (for example, the semantic library has been created and stored in the semantic library storage device in advance), and means that the semantic library storage device can provide the semantic library for current semantic communication (for example, load of the semantic library storage device meets a requirement). The semantic library may be unavailable because the semantic library does not exist; or the semantic library may be unavailable in a short period of time because load of the semantic library storage device may be heavy and the semantic library cannot be provided for current semantic communication in a short period of time. Alternatively, the semantic library may be unavailable in another possible case. This is not limited in this embodiment of this application.

S204: The AMF sends a response message to the first terminal device based on the query response, where the response message indicates whether the semantic library is available; and correspondingly, the first terminal device receives the response message.

S202 to S204 are optional steps. In a possible implementation, the AMF may perform a query after receiving the resource configuration request from the first terminal device, and then perform a subsequent procedure when the semantic library is available. If the semantic library is unavailable, after sending the response message to the first terminal device, the AMF may end the current procedure, and no longer perform a subsequent resource configuration. In addition, after receiving the response message and determining that the semantic library is unavailable, the first terminal device also ends the current procedure, and does not send a subsequent message (namely, the first information). In this way, the subsequent procedure is performed when it is ensured that the semantic library is available, which helps ensure normal execution of subsequent semantic communication, and avoids a case in which when a network side has configured a resource for the terminal device but the semantic library is unavailable, subsequent semantic communication cannot be normally performed, and consequently a resource waste is caused.

In another possible implementation, the AMF may not perform a query after receiving the resource configuration request from the first terminal device, and directly performs S205, and the first terminal device may continue to send the first information after sending the resource configuration status. That is, S208 is performed after S201 is performed. In this way, resource configuration efficiency can be improved, and semantic communication efficiency can be improved. It should be understood that, in this implementation, S201 and S208 may be two steps, as shown in FIG. 2, or may be combined into one step. This is not limited in this embodiment of this application. If S201 and S208 may be two steps as shown in FIG. 2, an execution sequence of S201 and S208 is not limited in this embodiment of this application.

S205: The AMF sends a resource configuration indication to a resource controller, where the resource configuration indication indicates to perform resource reservation and resource instantiation configuration; and correspondingly, the resource controller receives the resource configuration indication.

In this embodiment of this application, resources include a computing resource and/or a storage resource, and the resource controller can control and manage these resources. Therefore, the AMF sends the resource configuration indication to the resource controller, to indicate the resource controller to perform resource reservation and resource instantiation configuration.

Optionally, if S202 to S204 are performed, the AMF sends the resource configuration indication to the resource controller when the semantic library is available. The AMF does not send the resource configuration indication if the semantic library is unavailable.

S206: The resource controller performs resource reservation and resource instantiation configuration based on the resource configuration indication.

S207: The resource controller sends resource configuration information to the AMF, where the resource configuration information indicates a configured resource; and correspondingly, the AMF receives the resource configuration information.

For example, the resource configuration information includes an identifier of a configured computing node and/or an identifier of a configured storage node.

For example, the identifier of the computing node may be an internet protocol (internet protocol, IP) address of the computing node or a uniform resource identifier (uniform resource identifier, URI) of the computing node, and the identifier of the storage node may be an IP address of the storage node or a URI of the storage node.

It should be understood that the computing node and the storage node may correspond to a same physical device, or may correspond to different physical devices. This is not limited in this embodiment of this application.

S208: The first terminal device sends first information to the AMF, where the first information carries a key required for configuring a computing environment and a session identifier between the first terminal device and the second terminal device; and correspondingly, the AMF receives the first information.

It should be understood that the key required for configuring the computing environment may be generated by the first terminal device, or may be obtained by the first terminal device in another manner. This is not limited in this embodiment of this application.

It should be further understood that the session identifier between the first terminal device and the second terminal device is used to uniquely identify a current semantic communication session between the first terminal device and the second terminal device. Because a resource may need to be configured for a session between other devices (for example, a session between the first terminal device and another device, a session between the second terminal device and another device, or a session between two other devices), and a computing environment may be configured for different sessions by using different keys, the first information carries the session identifier between the first terminal device and the second terminal device, so that the AMF can clearly determine that the key in the first information is used to configure a resource required for semantic communication between the first terminal device and the second terminal device, instead of being used to configure a resource required for semantic communication between other devices.

S209: The AMF sends second information to a reasoning plane function network element, where the second information includes the resource configuration information, the key required for configuring the computing environment, and the session identifier; and
correspondingly, the reasoning plane function network element receives the second information.

Optionally, the resource configuration information, the key, and the session identifier that are included in the second information may be sent by using one message, or may be sent by using a plurality of messages. This is not limited in this embodiment of this application.

S210: The reasoning plane function network element initializes a TEE of the computing node and a TEE of the storage node based on the second information by using a key of the first terminal device.

In this embodiment of this application, the TEE is disposed in the computing node and the storage node, to process semantic extraction or semantic restoration in a semantic communication process. It should be understood that memory of a device may include a TEE and a rich execution environment (rich execution environment, REE). The REE means that a universal operating system such as Android or iOS may run in a runtime environment of the operating system. The REE is an open environment that is vulnerable to an attack. The TEE is a secure area on a central processing unit, and can ensure that sensitive data is processed in an isolated and trusted environment, thereby avoiding a software attack from the REE. Compared with another secure execution environment, the TEE can protect integrity and confidentiality of a trusted application (trusted application, TA) in an end-to-end manner, and can provide a stronger processing capability and larger memory space. The TEE provides an interface for software in the REE, so that the software in the REE can invoke data in the TEE for processing, but does not disclose sensitive data.

The AMF sends, to the reasoning plane function network element, the resource configuration information indicating the configured resource, the key required for configuring the computing environment, and the session identifier between the first terminal device and the second terminal device. The reasoning plane function network element may determine a corresponding resource node based on the information, and initialize a TEE in the node by using the key, to complete resource configuration.

Further, the first terminal device and the second terminal device may subsequently perform semantic communication in a configured environment based on the configured resource. A semantic processing (namely, semantic extraction or semantic restoration) operation is performed by the reasoning plane function network element in the TEE of the foregoing resource node. In this way, content of a user is processed in a trusted environment. In this way, the terminal device does not need to store the semantic library, and the terminal device does not need to perform the semantic processing operation, thereby saving memory of the terminal device and reducing a load of the terminal device. In addition, the content of the user is processed in the trusted environment, to ensure user privacy while ensuring normal execution of semantic communication.

Therefore, in the semantic communication method in this application, a terminal device that performs semantic communication sends the resource configuration request to the AMF, to request to configure the semantic communication resource. The AMF sends a resource configuration indication to a resource controller based on the resource configuration request, to perform resource reservation and a resource instantiation configuration. The terminal device sends the first information to the AMF. The first information carries the key required for configuring the computing environment. The AMF sends the first information and resource configuration information to a reasoning plane function network element, and the reasoning plane function network element initializes a trusted execution environment by using a key of the terminal device. The reasoning plane function network element is introduced, to provide a required computing resource and a required storage resource for two communication parties of semantic communication through trusted privacy protection, and content of a user is protected and processed in a trusted execution environment TEE. In this way, user privacy is ensured while ensuring normal execution of semantic communication, thereby improving system security and improving user experience.

In addition, in this embodiment of this application, a network provides interconnection of a resource, and a communication peer does not need to configure a resource in advance. A newly introduced reasoning plane function network element is flexibly deployed on an access network side or a core network side based on a privacy policy, to ensure compliance. Therefore, according to the semantic communication method in this embodiment of this application, the user can directly perform semantic communication without worrying about a resource required for semantic communication and a configuration requirement, and without worrying about a compliance and privacy problem caused by using the resource provided by the network, thereby improving user experience.

In the foregoing method, a semantic communication resource configuration process before normal semantic communication is described. A semantic communication resource needs to be configured by both an initiating device and a receiving device of semantic communication. Therefore, the first terminal device may be an initiating device of current semantic communication, or may be a receiving device of current semantic communication. This is not limited in this embodiment of this application. For example, if the first terminal device is an initiating device of current semantic communication, the second terminal device is a receiving device of current semantic communication; or if the first terminal device is a receiving device of current semantic communication, the second terminal device is an initiating device of current semantic communication. Current semantic communication can be normally performed only when both the initiating device and the receiving device are configured with a resource required for completing semantic communication.

The following describes cases in this embodiment of this application based on different roles of the first terminal device and the second terminal device.

Case 1: The first terminal device is a sending device of current semantic communication, and the second terminal device is a receiving device of current semantic communication.

In an optional embodiment, the method further includes: A reasoning plane function network element sends a data request to the first terminal device, where the data request is used to request to transmit data; and correspondingly, the first terminal device receives the data request. The first terminal device sends an encrypted data flow to the reasoning plane function network element based on the data request; and correspondingly, the reasoning plane function network element receives the encrypted data flow. The reasoning plane function network element decrypts the data flow, and performs semantic extraction on the data flow based on a semantic library of the first terminal device and a semantic library of the second terminal device, to obtain semantic key information. The reasoning plane function network element sends the semantic key information and a session identifier between the first terminal device and the second terminal device to a user plane function network element UPF; and correspondingly, the UPF receives the semantic key information and the session identifier.

Optionally, the data request carries the session identifier between the first terminal device and the second terminal device and an identifier of the semantic library between the first terminal device and the second terminal device, and the encrypted data flow carries the session identifier.

It should be understood that the UPF may subsequently send the received semantic key information and the received session identifier to the reasoning plane function network element corresponding to the second terminal device through a network. The reasoning plane function network element corresponding to the second terminal device performs a semantic restoration operation in the configured environment on the configured resource, to obtain semantic restoration information, and then sends the semantic restoration information and the session identifier to the second terminal device together.

In a possible implementation, the reasoning plane function network element obtains the semantic key information, and may directly send the semantic key information and the session identifier to the UPF.

In another possible implementation, the reasoning plane function network element obtains the semantic key information, and may first send the semantic key information and the session identifier to the first terminal device, and then the first terminal device sends the semantic key information and the session identifier to the UPF. In this case, the reasoning plane function network element may perform a part of semantic extraction operations, and send the semantic key information to the first terminal device. Then, the first terminal device performs another part of semantic extraction operations, and the first terminal device may send summarized semantic key information to the UPF.

Case 2: The second terminal device is a sending device of current semantic communication, and the first terminal device is a receiving device of current semantic communication.

In an optional embodiment, the method further includes: A reasoning plane function network element corresponding to the second terminal device sends a data request to the second terminal device, and correspondingly, the second terminal device receives the data request. The second terminal device sends an encrypted data flow to the reasoning plane function network element corresponding to the second terminal device based on the data request. The reasoning plane function network element corresponding to the second terminal device performs a semantic extraction operation, and sends semantic key information and a session identifier to a reasoning plane function network element corresponding to the first terminal device through a UPF. The reasoning plane function network element corresponding to the first terminal device performs a semantic restoration operation. The reasoning plane function network element corresponding to the first terminal device receives the semantic key information and the session identifier, and performs semantic restoration on the semantic key information by using the semantic library of the first terminal device and the semantic library of the second terminal device, to obtain semantic restoration information. The reasoning plane function network element corresponding to the first terminal device sends the semantic restoration information and the session identifier to the first terminal device; and correspondingly, the first terminal device receives the semantic restoration information and the session identifier.

It should be understood that, in Case 2 and Case 1, only a transmit side and a receive side are exchanged. Specific steps and details in Case 2 are similar to those in Case 1. For details, refer to the foregoing descriptions. Details are not described herein again.

It should be further understood that, in this embodiment of this application, the reasoning plane function network element has obtained the semantic library of the first terminal device and the semantic library of the second terminal device from a semantic library storage device in advance, and therefore can perform the semantic extraction operation and/or the semantic restoration operation. The semantic library may be obtained based on an index (for example, a hash value of the semantic library) of the semantic library, or based on an identifier (for example, a public key ID) of the first terminal device and an identifier (for example, a public key ID) of the second terminal device. Details are not described herein again.

In an optional embodiment, the method further includes: The first terminal device sends an end notification to the reasoning plane function network element, where the end notification indicates that semantic communication between the first terminal device and the second terminal device ends; and correspondingly, the reasoning plane function network element receives the end notification. The reasoning plane function network element sends a resource release notification to the resource controller; and correspondingly, the resource controller receives the resource release notification, and performs a resource release based on the resource release notification.

It should be understood that, that a semantic processing procedure ends means that a current semantic session ends. To be specific, there is no subsequent data flow that is from the first terminal device and that has a session identifier the same as the foregoing session identifier. According to a processing manner in which the first terminal device sends the end notification, a related resource can be released earlier, so that the related resource is used for other communication, thereby improving resource utilization.

In an optional embodiment, the resource configuration request carries at least one of the following: a semantic communication type between the first terminal device and the second terminal device; or description information of a computing resource and a storage resource that are required for performing semantic communication between the first terminal device and the second terminal device; or an identifier of the first terminal device and an identifier of the second terminal device.

The semantic communication type may be, for example, any one of joint source and channel coding (namely, a feature stream), object-based semantic extraction, multimedia encoding/decoding, task segmentation, and the like.

The description information of the computing resource and the storage resource may include, for example, a computational power type, a standard computational power measurement unit, a delay requirement, or a storage capacity.

In an optional embodiment, the resource configuration request carries a first public key in a first public-private key pair used for semantic communication; and the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment.

In this case, the method further includes: The AMF separately decrypts the plurality of first ciphertexts by using the first public key, to obtain the plurality of second public keys. The AMF uses second information to carry the plurality of second public keys, and sends the second information to the reasoning plane function network element. In other words, the second information carries the plurality of second public keys and the resource category information corresponding to the plurality of second public keys.

That the reasoning plane function network element initializes the TEE of the computing node and the TEE of the storage node by using the key of the first terminal device in S210 includes: The reasoning plane function network element determines, based on the second information, a computing instance corresponding to each of the plurality of second public keys, and a computing node and/or a storage node corresponding to the computing instance. The reasoning plane function network element sends third information to the resource controller. The third information includes information indicating the plurality of second public keys and computing instance information corresponding to each second public key, and the computing instance information includes an identifier of the computing node and/or an identifier of the storage node. Correspondingly, the resource controller receives the third information. The resource controller initializes a trusted execution environment TEE of the computing node and/or a TEE of the storage node based on the third information by using the plurality of second public keys.

It should be understood that the resource category information may be a category obtained through classification based on a resource type, for example, a computing resource or a storage resource; or may be a category obtained through classification based on a computational power, for example, a central processing unit (center processing unit, CPU), a graphics processing unit (graphics processing unit, GPU), or a heterogeneous processor. This is not limited in this embodiment of this application.

One public-private key pair may correspond to one resource category, or may correspond to a plurality of resource categories. This is not limited in this embodiment of this application.

According to the foregoing method, different public keys (namely, the second public key) used to initialize the TEE can be configured for different computing instances. In this way, the trusted execution environment can be initialized at a finer granularity, and system security is enhanced.

In an optional embodiment, the method further includes: The resource controller sends a confirmation message to the reasoning plane function network element. The confirmation message indicates that the TEE is initiated; and correspondingly, the reasoning plane function network element receives the confirmation message.

In an optional embodiment, the information indicating the plurality of second public keys required for configuring the computing environment is a plurality of third ciphertexts, and the plurality of third ciphertexts are obtained by separately encrypting the plurality of second public keys by using a third private key in a third public-private key pair. The method further includes: The reasoning plane function network element generates the third public-private key pair. The third public-private key pair includes a third public key and the third private key. The reasoning plane function network element sends the third public key to the resource controller; and correspondingly, the resource controller receives the third public key. The resource controller separately decrypts the plurality of third ciphertexts by using the third public key, to obtain the plurality of second public keys.

In this embodiment of this application, the third public-private key pair between the reasoning plane function network element and the resource controller is introduced, to avoid leakage of the second key. In this way, an information transfer process between the reasoning plane function network element and the resource controller is more secure, thereby improving security of an entire resource configuration process.

In an optional embodiment, the method further includes: The first terminal device generates the first public-private key pair. The first public-private key pair includes the first public key and the first private key. The first terminal device generates a plurality of second public-private key pairs. Each of the plurality of second public-private key pairs includes the second public key and a second private key.

It should be understood that, usually, the public key is sent by a generator to another device for publication, and the private key is reserved by the generator for subsequent verification or encryption. For example, the first terminal device may encrypt the second public key by using the first private key, and the first terminal device may subsequently access the TEE by using the second private key.

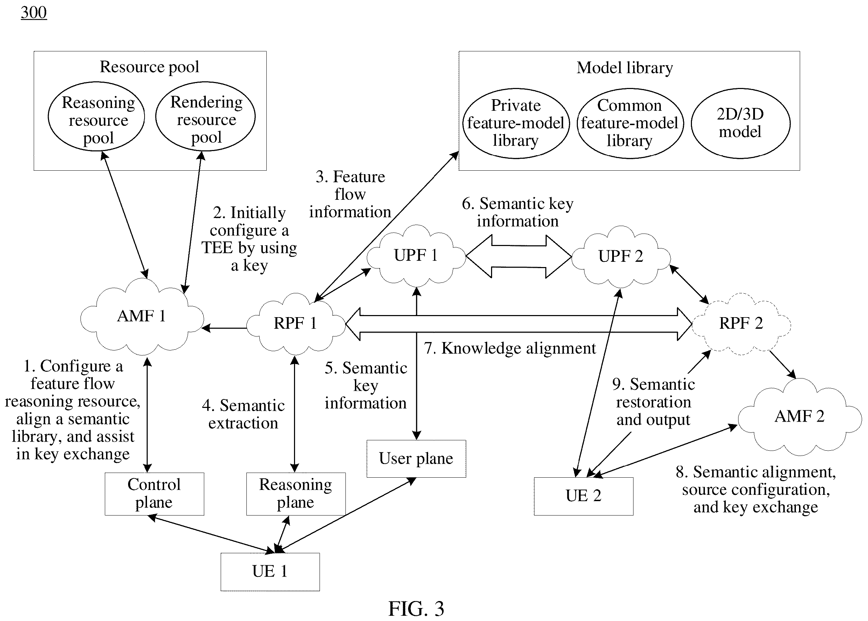

The following describes an overall semantic communication process with reference to FIG. 3 by using an example in which the first terminal device is UE 1, the second terminal device is UE 2, and the reasoning plane function network element is an RPF. The UE 1 is a sending device, an AMF 1 is a transmit-side AMF, an RPF 1 is a transmit-side reasoning plane function network element, a UPF 1 is a transmit-side UPF, UE 2 is a receive device, an AMF 2 is a receive-side AMF, an RPF 2 is a receive-side reasoning plane function network element, and a UPF 2 is a receive-side UPF. A semantic communication process 300 shown in FIG. 3 includes the following steps.

Step 1: The UE 1 is connected to the AMF 1 through a control plane, and is connected to a resource controller through the AMF, to configure a feature flow reasoning resource, align a semantic library, and assist in key exchange.

The resource controller is responsible for managing a resource in a resource pool, and the resource pool includes a reasoning resource pool and a rendering resource pool.

Step 2: The RPF 1 initially configures a TEE of a computing node and a TEE of a storage node in a resource pool through the AMF 1 by using a key of the UE 1.

Step 3: The RPF 1 obtains existing feature flow information based on a model library.

Step 4: The RPF 1 performs semantic extraction on a data flow from the UE 1 in a configured environment based on the structured feature stream information, to obtain semantic key information.

Step 5: The RPF 1 sends the semantic key information to the UPF 1.

Step 6: The UPF 1 sends the semantic key information to the UPF 2, and the UPF 2 sends the semantic key information to the RPF 2.

Optionally, in another possible implementation, the semantic key information may be sent by the RPF 1 to the RPF 2. This is not limited in this embodiment of this application.

Step 7: The RPF 1 and the RPF 2 perform knowledge alignment. The knowledge alignment herein may be understood as alignment of information such as the environment and the semantic library required for current semantic communication.

Step 8: The AMF 2 performs semantic alignment (namely, semantic library alignment), resource configuration, and key exchange.

Step 9: The RPF 2 performs semantic restoration on the semantic key information in the configured environment, to obtain semantic restoration information, and sends the semantic restoration information to the UE 2.

Optionally, in another possible implementation, the semantic key information may be sent to the UE 2, and the UE 2 performs semantic restoration independently. This is not limited in this embodiment of this application. It should be understood that the RPF 2 shown in FIG. 3 is optional.

Without a loss of generality, the following describes in detail the semantic communication method provided in embodiments of this application by using an interaction process between devices as an example. A terminal device 1 corresponds to the first terminal device in the foregoing method, a terminal device 2 corresponds to the second terminal device in the foregoing method, and an RPF corresponds to the reasoning plane function network element in the foregoing method.

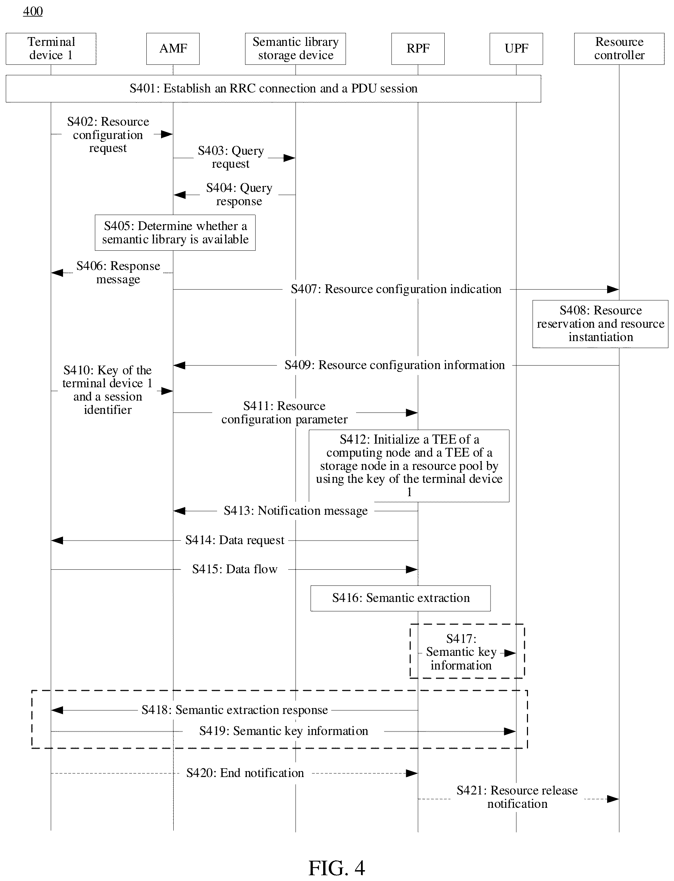

FIG. 4 is a schematic flowchart of a semantic communication method 400 according to an embodiment of this application. The method 400 includes the following steps.

S401: A terminal device 1 establishes a radio resource control (radio resource control, RRC) connection and a protocol data unit (protocol data unit, PDU) session with a network side. In this case, the terminal device 1 and a user plane of an access network that is currently in an active state are in a connected state.

It should be understood that before the procedure in this embodiment of this application starts, the terminal device 1, as a calling party, has uploaded, to a semantic library storage device through a network, a semantic library used for performing semantic communication with a terminal device 2; or the terminal device 1 declares that semantic communication is performed with the terminal device 2 based on a shared semantic library, and the shared semantic library is stored in a semantic library storage device.

It should be further understood that, in this embodiment of this application, an AMF has a resource collaboration capability, there is an existing connection between the terminal device 1 and the AMF, and a bidirectional authentication process between the terminal device 1 and the AMF is completed.

S402: The terminal device 1 sends a resource configuration request to the AMF, where the resource configuration request is used to request to configure a computing resource and a storage resource for semantic communication; and correspondingly, the AMF receives the resource configuration request.

It should be understood that the terminal device 1 may send the resource configuration request to the AMF when preparing to communicate with the terminal device 2 in a semantic manner.

Optionally, the resource configuration request may carry at least one of the following information:
1. Semantic communication type: The semantic communication type may be, for example, any one of joint source and channel coding (namely, a feature stream), object-based semantic extraction, multimedia encoding/decoding, task segmentation, and the like.
2. Description information of the computing resource and the storage resource required for semantic communication, including a computational power type, a standard computational power measurement unit, a delay requirement, a storage capacity, or the like. The computational power type may be, for example, any one of a CPU type, a GPU type, or a heterogeneous type (for example, a CPU+GPU type or a dedicated computational power type). The standard computational power measurement unit may be, for example, any one of floating-point operations per second (floating-point operations per second, FLOPS), tera operations per second (tera operations per second, TOPS), giga operations per second (giga operations per second, GOPS), or million operation per second (million operation per second, MOPS).
3. Identifier of the terminal device 1 and identifier of the terminal device 2.

In a possible implementation, the identifier of the terminal device 1 is an ID of the terminal device 1, and the identifier of the terminal device 2 is an ID of the terminal device 2.

In another possible implementation, the identifier of the terminal device 1 is a public key ID of the terminal device 1, and the identifier of the terminal device 2 is a public key ID of the terminal device 2.

It should be understood that the public key ID is an ID derived based on a public key. The public key ID of the terminal device 1 may be, for example, a distributed identity or a blockchain address of the terminal device 1, and may be specifically, for example, Hash (PKu1). PKu1 is a public key of the terminal device 1, and Hash (PKu1) represents a value obtained by performing a hash operation on PKu1.

It should be further understood that, in actual applications, the terminal device 1 may perform semantic communication with a plurality of terminal devices. In other words, a corresponding semantic library is established between the terminal device 1 and each of the plurality of terminal devices. The terminal device 2 may also perform semantic communication with a plurality of terminal devices. In other words, a corresponding semantic library is established between the terminal device 2 and each of the plurality of terminal devices. Therefore, for each semantic library, the semantic library storage device stores a correspondence between an identifier of a semantic library and identifiers of two parties that perform semantic communication based on the semantic library, so that an accurate search can be performed subsequently. In this embodiment of this application, the semantic library storage device stores a correspondence between the identifier of the semantic library, the identifier of the terminal device 1, and the identifier of the terminal device 2.

For example, if an identifier of a terminal device stored in the semantic library storage device is an ID of the terminal device, the resource configuration request may carry the ID of the terminal device 1 and the ID of the terminal device 2; or if an identifier of a terminal device stored in the semantic library storage device is a public key ID of the terminal device, the resource configuration request may carry the public key ID of the terminal device 1 and the public key ID of the terminal device 2.

S403: The AMF sends a query request to the semantic library storage device based on the resource configuration request, where the query request is used to request to query a semantic library used by the terminal device 1 and the terminal device 2; and correspondingly, the semantic library storage device receives the query request.

Optionally, the query request may carry the identifier of the terminal device 1 and the identifier of the terminal device 2.

S404: The semantic library storage device obtains the identifier of the semantic library based on the query request, and sends a query response to the AMF, where the query response carries the identifier of the semantic library; and correspondingly, the AMF receives the query response.

For example, the semantic library used for semantic communication between the terminal device 1 and the terminal device 2 is referred to as an LA for short, and the identifier of the semantic library may be Hash (PKu2 (LA)).

In this embodiment of this application, the semantic library used for communication between the terminal device 1 and the terminal device 2 can be accurately found based on the identifier of the terminal device 1 and the identifier of the terminal device 2.

S405: The AMF determines, based on the query response, whether the semantic library is available.

Specifically, if the AMF can find the semantic library, that is, the query response carries the identifier of the semantic library, it indicates that the semantic library is available; or if the AMF does not find the semantic library, that is, the query response does not carry the identifier of the semantic library, it indicates that the semantic library is unavailable.

S406: The AMF sends a response message to the terminal device 1, where the response message indicates a state (available or unavailable) of a semantic library requested by the terminal device 1; and correspondingly, the terminal device 1 receives the response message.

For example, if the response message is an ACK, it indicates that the semantic library requested by the terminal device 1 is available; and if the response message is a NACK, it indicates that the semantic library requested by the terminal device 1 is unavailable.

Optionally, the response message may further carry a new public-private key pair additionally generated by the AMF, and the new public-private key pair is used in a subsequent resource configuration process, to improve resource configuration security.

S407: When the semantic library is available, the AMF sends a resource configuration indication to a resource controller, where the resource configuration indication indicates to perform resource reservation and resource instantiation configuration; and correspondingly, the resource controller receives the resource configuration indication.

Optionally, the resource configuration indication may carry the description information of the computing resource and the storage resource that are required for semantic communication.

S408: The resource controller performs resource reservation and resource instantiation configuration based on the resource configuration indication.

Optionally, the resource controller may specifically select the computing resource and the storage resource based on the computational power type, the standard computational power measurement unit, the delay requirement, the storage capacity, and the like in the description information, and complete resource instantiation.

S409: The resource controller sends resource configuration information to the AMF, where the resource configuration information includes an identifier of a computing node and/or an identifier of a storage node; and correspondingly, the AMF receives the resource configuration information.

For example, the identifier of the computing node may be an internet protocol (internet protocol, IP) address of the computing node or a uniform resource identifier (uniform resource identifier, URI) of the computing node, and the identifier of the storage node may be an IP address of the storage node or a URI of the storage node.

It should be understood that the computing node and the storage node may correspond to a same physical device, or may correspond to different physical devices. This is not limited in this embodiment of this application.

S410: The terminal device 1 sends a key and a session identifier to the AMF. For example, the session identifier may be an RPF flow ID.

It should be understood that, in actual applications, the terminal device 1 may simultaneously perform semantic communication with a plurality of terminal devices, that is, there are a plurality of sessions, and different sessions have different session identifiers, to facilitate differentiation by an RPF.

S411: The AMF sends a resource configuration parameter to the RPF, where the resource configuration parameter may include the identifier of the computing node, the identifier of the storage node, the identifier of the semantic library, the session identifier, a key of the terminal device 1, and the like; and correspondingly, the RPF receives the resource configuration parameter.

S412: The RPF is connected to a network interface of a configured resource instance based on the identifier of the computing node and the identifier of the storage node, and initializes a TEE of the computing node and a TEE of the storage node in a resource pool by using the key of the terminal device 1.

It should be understood that this step is completed by the RPF through interaction with the computing node and the storage node, and the computing node and the storage node are not shown in the figure.

S413: The RPF sends a notification message to the AMF, to notify a resource configuration status; and correspondingly, the AMF receives the notification message.

Specifically, if resource configuration is completed, the notification message is used to notify that the resource configuration is completed; or if resource configuration is faulty, the notification message is used to notify a fault type.

S414: The RPF sends a data request to the terminal device 1, to request to transmit semantic data, where the data request includes the session identifier and the identifier of the semantic library; and correspondingly, the terminal device 1 receives the data request.

S415: The terminal device 1 sends a data flow of semantic communication to the RPF based on the data request, where the data flow is encrypted by using the key of the terminal device 1 and includes the session identifier; and correspondingly, the RPF receives the data flow.

It should be understood that the data flow may also be referred to as source data of the terminal device 1.

Optionally, the data flow further includes a parameter used for task segmentation, specifically, for example, a capability description of the terminal device 1 and a task requirement (for example, a delay requirement and a QoS requirement) of current semantic communication.

Optionally, in S415, the terminal device 1 may send the data flow to the RPF in a form of streaming. A main advantage of streaming transmission is that the RPF can check or listen to received data without waiting for completion of downloading. A large amount of storage space is not required, which can save memory of the RPF. In addition, the RPF can perform downloading while processing, which reduce a waiting time of the RPF.

S416: The RPF performs semantic extraction on the received data flow, to obtain semantic key information.

Specifically, the RPF may perform semantic extraction processing (including processing based on a feature stream, an object, task segmentation, or the like) on the data flow on an instantiated resource (including the computing resource and the storage resource), to obtain the semantic key information. It should be understood that the semantic extraction may also be referred to as semantic compression.

It should be further understood that, before performing S416, the RPF has obtained, from the semantic library storage device, the semantic library (not shown in the figure) for performing semantic communication between the terminal device 1 and the terminal device 2, and the RPF performs semantic extraction on the data flow based on the semantic library.

The RPF may send the semantic key information to the UFP, or may send the semantic key information to the terminal device 1, and then the terminal device 1 sends the semantic key information to the UFP. This is not limited in this embodiment of this application.

Manner 1: S417: The RPF sends the semantic key information and the session identifier to the UFP; and correspondingly, the UPF receives the semantic key information and the session identifier.

Manner 2: S418: The RPF sends a semantic extraction response to the terminal device 1, where the semantic extraction response carries the semantic key information and the session identifier; and correspondingly, the terminal device 1 receives the semantic extraction response. S419: The terminal device 1 sends the semantic key information and the session identifier to the UFP.

In a possible implementation, the RPF performs all semantic extraction operations in S416, and may perform Manner 1 or Manner 2. The semantic key information in S417 is the same as the semantic key information in S419.

In another possible implementation, the RPF performs a part of semantic extraction operations in S416. The RPF may send the semantic key information to the terminal device 1, and then the terminal device 1 performs another part of semantic extraction operations. Then, the terminal device 1 sends the semantic key information to the UPF. In this case, the semantic key information in S417 is not completely the same as the semantic key information in S419.

Optionally, an integrity check of the semantic key information may be added. For example, a check bit or a hash value is carried in the semantic key information, so that a receiver (for example, the UPF or the terminal device 1) of the information verifies integrity of the semantic key information.

After obtaining the semantic key information, the UPF may send the semantic key information to the terminal device 2 (or a network side device corresponding to the terminal device 2) based on the session identifier in the semantic key information.

Optionally, the method 400 may further include the following steps.

S420: The terminal device 1 sends an end notification to the RPF, to notify that a current semantic processing procedure ends; and correspondingly, the RPF receives the end notification.

S421: The RPF sends a resource release notification to the resource controller based on the end notification; and correspondingly, the resource controller receives the resource release notification, to release a related computing resource and storage resource.

It should be understood that, that a semantic processing procedure ends means that a current semantic session ends. To be specific, there is no subsequent data flow that is from the terminal device 1 and that has a session identifier the same as the foregoing session identifier. According to a manner in which the terminal device 1 sends the end notification, a related resource can be released earlier, so that the related resource is used for other communication, thereby improving resource utilization.

Optionally, S420 and S421 may be replaced with another possible implementation. In this implementation, if the RPF does not receive a data flow from the terminal device 1 for a long period of time, the RPF may send the resource release notification to the resource controller, to indicate the resource controller to release the related computing resource and storage resource. For example, the RPF may start a timer when receiving the data flow from the terminal device 1. If the timer expires and the RPF does not receive a next data flow from the terminal device 1, the RPF may consider that the current semantic processing procedure ends, and send the resource release notification to the resource controller.

According to the semantic communication method in this embodiment of this application, the reasoning plane function network element is introduced, to provide a required computing resource and a required storage resource for two communication parties of semantic communication through trusted privacy protection, and content of a user is protected and processed in a TEE. In this way, user privacy is ensured while ensuring normal execution of semantic communication, thereby improving system security and improving user experience.

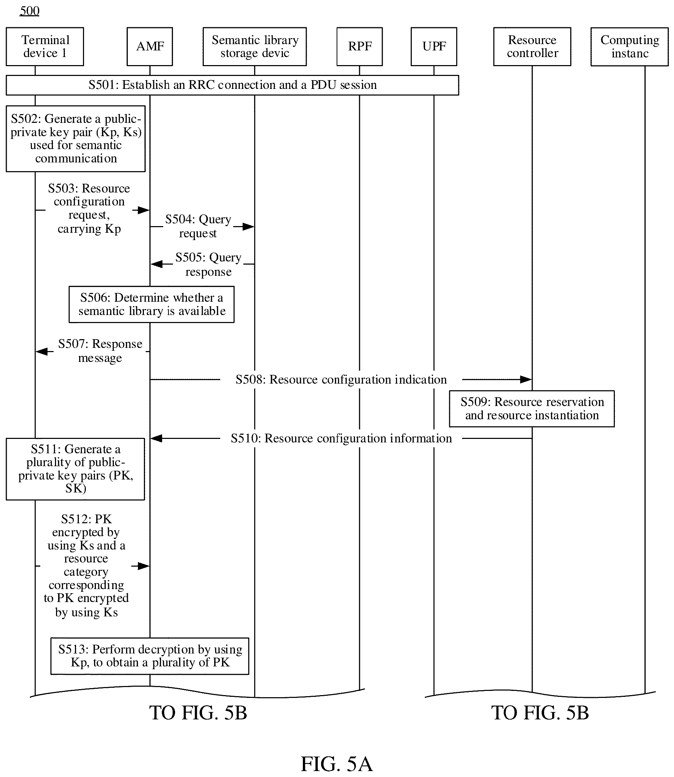

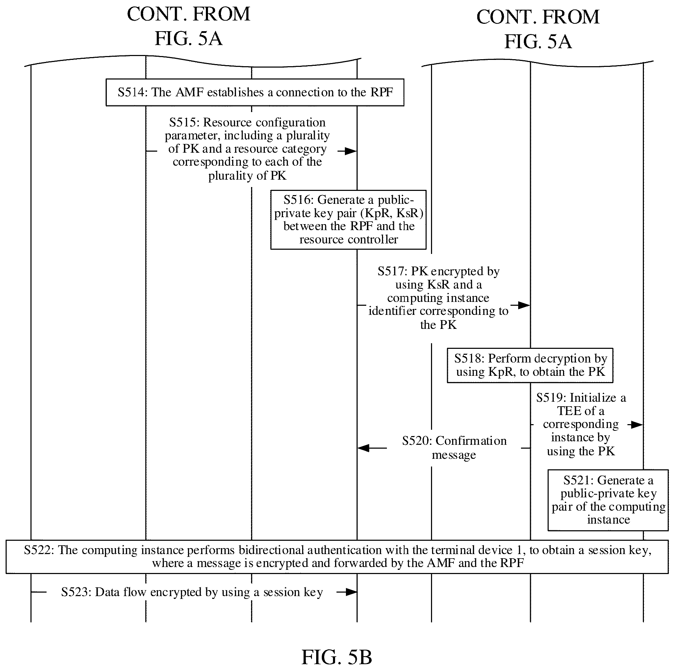

The foregoing describes, with reference to the method 400 shown in FIG. 4, a process of requesting a resource during semantic communication between a terminal device 1 and a terminal device 2. The following describes, with reference to FIG. 5A and FIG. 5B, a process of distributing a key for a computing resource and a storage resource during semantic communication between the terminal device 1 and the terminal device 2.

FIG. 5A and FIG. 5B are a schematic flowchart of another semantic communication method 500 according to an embodiment of this application. The method 500 includes the following steps.

S501: A terminal device 1 establishes an RRC connection and a PDU session with a network side. In this case, the terminal device 1 and a user plane of an access network that is currently in an active state are in a connected state.

S502: The terminal device 1 generates a public-private key pair (Kp, Ks) used for semantic communication.

S503: The terminal device 1 sends a resource configuration request to an AMF, where the resource configuration request is used to request to configure a computing resource and a storage resource for semantic communication; and correspondingly, the AMF receives the resource configuration request.

The resource configuration request carries a public key Kp and task description information. The task description information may include a semantic communication type, description information of a computing resource and a storage resource that are required for semantic communication, an identifier of the terminal device 1, an identifier of a terminal device 2, and the like. This is not limited in this embodiment of this application.

S504: The AMF sends a query request to a semantic library storage device based on the resource configuration request, where the query request is used to request to query a semantic library used by the terminal device 1 and the terminal device 2; and correspondingly, the semantic library storage device receives the query request.

S505: The semantic library storage device obtains an identifier of the semantic library based on the query request, and sends a query response to the AMF, where the query response carries the identifier of the semantic library; and correspondingly, the AMF receives the query response.

S506: The AMF determines whether the semantic library is available.

S507: The AMF sends a response message to the terminal device 1, where the response message indicates a state (available or unavailable) of a semantic library requested by the terminal device 1.

S508: When the semantic library is available, the AMF sends a resource configuration indication to a resource controller, where the resource configuration indication indicates to perform resource reservation and instantiation configuration; and correspondingly, the resource controller receives the resource configuration indication.

S509: The resource controller performs resource reservation and resource instantiation configuration based on the resource configuration indication.

S510: The resource controller sends resource configuration information to the AMF, where the resource configuration information includes an identifier of a computing node and an identifier of a storage node; and correspondingly, the AMF receives the resource configuration information.

For details of S501 to S510, refer to the descriptions of S401 to S409 in the method 400. Details are not described herein again.

S511: When the semantic library is available, the terminal device 1 generates a plurality of public-private key pairs (PK, SK).

Optionally, a quantity of public-private key pairs generated by the terminal device 1 may be determined based on a resource category or a resource quantity required for semantic communication. For example, the terminal device 1 generates one public-private key pair for each resource category or each resource.

It should be understood that the resource category may specifically include, for example, a computing resource or a storage resource, or may be, for example, a CPU, a GPU, or a heterogeneous processor.

In a possible implementation, one public-private key pair corresponds to one resource category. To be specific, in S511, the terminal device 1 generates one public-private key pair for each resource category based on the resource category.

In another possible implementation, one public-private key pair corresponds to a plurality of resource categories. To be specific, in S511, the terminal device 1 generates the public-private key pair based on the resource quantity or in another manner.

S512: The terminal device 1 encrypts the public key PK in the plurality of public-private key pairs by using a private key Ks based on the resource category, to obtain a plurality of Ks (PK), and sends the plurality of Ks (PK) and a resource category corresponding to each Ks (PK) to the AMF; and correspondingly, the AMF receives the plurality of Ks (PK) and the resource category corresponding to each Ks (PK).

S513: The AMF decrypts the plurality of Ks (PK) by using Kp, to obtain a plurality of PK, and determines a resource category corresponding to each PK.

S514: The AMF establishes a connection to the RPF.

S515: The AMF sends a resource configuration parameter to the RPF, where the resource configuration parameter may include the identifier of the computing node, the identifier of the storage node, the identifier of the semantic library, the plurality of PK, the resource category corresponding to each of the plurality of PK, and the like; and correspondingly, the RPF receives the resource configuration parameter.

S516: The RPF generates a public-private key pair (KpR, KsR) between the RPF and the resource controller, and determines, based on the resource configuration parameter, a public key PK corresponding to each computing instance, and a computing node and a storage node that correspond to each computing instance.

Optionally, one computing instance corresponds to one PK. In other words, each computing instance corresponds to a different key. This can enhance system security.

S517: The RPF encrypts the plurality of PK by using a private key KsR, to obtain a plurality of KsR (PK), and sends, to the resource controller, the plurality of KsR (PK) and a computing instance identifier corresponding to each PK.

Optionally, the computing instance identifier may include an identifier of a computing node and an identifier of a storage node that correspond to the computing instance.

S518: The resource controller decrypts the plurality of KsR (PK) by using KpR, to obtain the plurality of PK.

S519: The resource controller sends, based on the computing instance identifier corresponding to each PK, each PK to a computing instance corresponding to the PK, and initializes a TEE of the corresponding computing instance by using the PK.

It should be understood that the computing instance includes the computing node and the storage node. That the resource controller sends each PK to the computing instance corresponding to the resource controller may be understood as that the resource controller sends each PK to the computing node and the storage node of the computing instance corresponding to the PK based on the identifier of the computing node and the identifier of the storage node of each computing instance.

S520: The resource controller sends a confirmation message to the RPF, to notify the RPF that the computing instance has completed key injection (that is, the TEE is initialized); and correspondingly, the RPF receives the confirmation message.

The confirmation message may carry related configuration information of the computing instance, and is encrypted by using KpR. After receiving the confirmation message, the RPF may perform decryption by using KsR, to obtain the related configuration information of the computing instance. The related configuration information herein may include a network address (namely, an IP address or a URI of a corresponding node) of the computing instance, an identifier of the computing instance, a key injection state of the computing instance (namely, key injection of a corresponding node succeeds or key injection of a corresponding node fails), and the like.

S521: The computing instance generates a public-private key pair of the computing instance.

S522: The computing instance performs bidirectional authentication with the terminal device 1 by using the generated public-private key pair, and obtains a session key used to process a data flow.

Optionally, a session key exchange message of the computing instance needs to be forwarded by the RPF and the AMF, and each segment of forwarding needs to be encrypted by using public keys of two ends. To be specific, a message sent by the terminal device 1 to the AMF is encrypted by using a public key of the AMF, a message sent by the AMF to the terminal device 1 is encrypted by using a public key of the terminal device 1, a message sent by the RPF to the computing instance is encrypted by using a public key of the computing instance, and a message sent by the computing instance to the RPF is encrypted by using a public key of the RPF. In summary, a transmitter encrypts a sent message by using a public key of a receiver. In this way, the receiver can decrypt the message by using a private key of the receiver, to obtain specific message content.

It should be understood that the public key of the AMF and the public key of the terminal device 1 may be generated when the AMF and the terminal device 1 perform bidirectional authentication before this procedure is performed, or the public key of the terminal device 1 may be Kp generated in S502. This is not limited in this embodiment of this application. The public key of the computing instance may be generated in S521, and the public key of the RPF may be KpR generated in S516, or may be generated in another case. This is not limited in this embodiment of this application.

S523: The terminal device 1 encrypts the data flow by using the session key, and sends the encrypted data flow to the RPF. Correspondingly, the RPF receives the encrypted data flow.

Optionally, the RPF may decrypt the encrypted data flow, and perform subsequent semantic extraction processing on the encrypted data flow. For example, steps after S523 are the same as S416 to S421 in the method 400. Details are not described herein again.

According to the semantic communication method in this embodiment of this application, different public keys (namely, the second public key) used to initialize the TEE can be configured for different computing instances. In this way, the trusted execution environment can be initialized at a finer granularity, and system security is enhanced. This embodiment of this application is more applicable to configuration of a computing resource and a storage resource that are used for user privacy protection.

It should be understood that sequence numbers of the foregoing processes do not mean execution sequences. The execution sequence of the processes should be determined based on functions and internal logic of the processes, and should not be construed as any limitation on implementation processes of embodiments of this application.

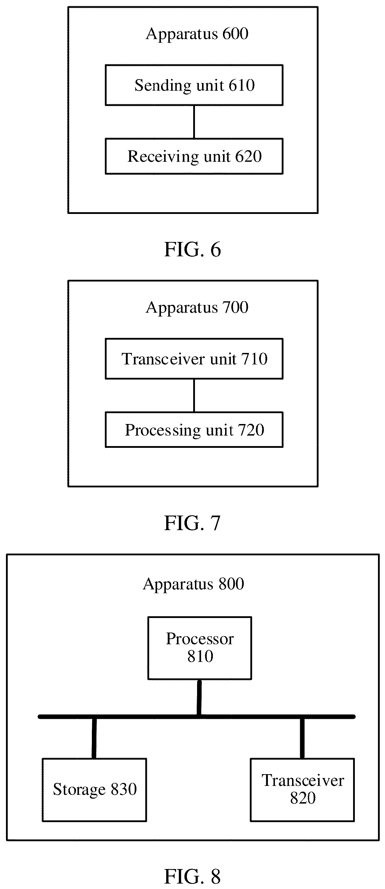

The foregoing describes in detail the semantic communication method according to embodiments of this application with reference to FIG. 1 to FIG. 5A and FIG. 5B. The following describes in detail a semantic communication apparatuses according to embodiments of this application with reference to FIG. 6 to FIG. 8.

FIG. 6 shows a semantic communication apparatus 600 according to an embodiment of this application. The apparatus 600 includes a sending unit 610 and a receiving unit 620.

In a possible design, the apparatus 600 may be a first terminal device, or may be a chip in the first terminal device.

The sending unit 610 is configured to send a resource configuration request to an access and mobility management function network element. The resource configuration request is used to request to configure a semantic communication resource between the first terminal device and a second terminal device. The receiving unit 620 is configured to receive a response message from the access and mobility management function network element. The response message indicates whether a semantic library is available. The sending unit 610 is further configured to send first information to the access and mobility management function network element when the semantic library is available. The first information carries a key required for configuring a computing environment and a session identifier between the first terminal device and the second terminal device.

Optionally, the receiving unit 620 is further configured to receive a data request from a reasoning plane function network element. The data request is used to request to transmit data. The sending unit 610 is further configured to send an encrypted data flow to the reasoning plane function network element based on the data request.

Optionally, the data request carries the session identifier and an identifier of the semantic library, and the encrypted data flow carries the session identifier.

Optionally, the receiving unit 620 is further configured to receive semantic key information and the session identifier from the reasoning plane function network element. The sending unit 610 is further configured to send the semantic key information and the session identifier to a user plane function network element.

Optionally, the receiving unit 620 is further configured to receive semantic restoration information and the session identifier from the reasoning plane function network element.

Optionally, the sending unit 610 is further configured to send an end notification to the reasoning plane function network element. The end notification indicates that semantic communication between the first terminal device and the second terminal device ends.

Optionally, the resource configuration request carries at least one of the following: a semantic communication type between the first terminal device and the second terminal device; or description information of a computing resource and a storage resource that are required for performing semantic communication between the first terminal device and the second terminal device; or an identifier of the first terminal device and an identifier of the second terminal device.

Optionally, the resource configuration request carries a first public key in a first public-private key pair used for semantic communication; and the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment.

Optionally, the apparatus 600 further includes: a processing unit, configured to: generate the first public-private key pair, where the first public-private key pair includes the first public key and the first private key; and generate a plurality of second public-private key pairs, where each of the plurality of second public-private key pairs includes the second public key and a second private key.

In another possible design, the apparatus 600 may be an access and mobility management function network element, or may be a chip in the access and mobility management function network element.

The receiving unit 620 is configured to receive a resource configuration request from a first terminal device. The resource configuration request is used to request to configure a semantic communication resource between the first terminal device and a second terminal device. The sending unit 610 is configured to send a resource configuration indication to a resource controller in response to the resource configuration request. The resource configuration indication indicates to perform resource reservation and resource instantiation configuration. The receiving unit 620 is further configured to: receive resource configuration information from the resource controller, where the resource configuration information indicates a configured resource; and receive first information from the first terminal device, where the first information carries a key required for configuring a computing environment and a session identifier between the first terminal device and the second terminal device. The sending unit 610 is further configured to send second information to a reasoning plane function network element. The second information includes the resource configuration information, the key required for configuring the computing environment, and the session identifier.

Optionally, the resource configuration information includes an identifier of a configured computing node and/or an identifier of a configured storage node.

Optionally, the sending unit 610 is further configured to send a query request to a semantic library storage device. The query request is used to request to query a semantic library of the first terminal device and a semantic library of the second terminal device. The receiving unit 620 is further configured to receive a query response from the semantic library storage device. The query response indicates whether the semantic library is available. The sending unit 610 is further configured to send a response message to the first terminal device. The response message indicates whether the semantic library is available.

Optionally, the sending unit 610 is further configured to send the resource configuration indication to the resource controller based on the resource configuration request when the semantic library is available.

Optionally, the resource configuration request carries a first public key in a first public-private key pair used for semantic communication; the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment; and the second information carries the plurality of second public keys and resource category information corresponding to the plurality of second public keys; and the apparatus 600 further includes: a processing unit, configured to separately decrypt the plurality of first ciphertexts by using the first public key, to obtain the plurality of second public keys.

It should be understood that the apparatus 600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described function. In an optional example, a person skilled in the art may understand that the apparatus 600 may be specifically the first terminal device or the access and mobility management function network element in the foregoing embodiments, and the apparatus 600 may be configured to perform procedures and/or steps corresponding to the first terminal device or the access and mobility management function network element in the foregoing method embodiments. To avoid repetition, details are not described herein again.

The apparatus 600 in each of the foregoing solutions has a function of implementing corresponding steps performed by the first terminal device or the access and mobility management function network element in the foregoing method. The function may be implemented by hardware, or may be implemented by hardware by executing corresponding software. The hardware or the software includes one or more modules corresponding to the foregoing function. For example, the sending unit 610 and the receiving unit 620 may be combined into a transceiver unit. The sending unit may be replaced by a transmitter, and the receiving unit may be replaced by a receiver, to respectively perform sending and receiving operations and related processing operations in the method embodiments.

In this embodiment of this application, the apparatus 600 in FIG. 6 may alternatively be a chip or a chip system, for example, a system on chip (system on chip, SoC). Correspondingly, the sending unit 610 and the receiving unit 620 may be a transceiver circuit of the chip. This is not limited herein.

FIG. 7 shows another semantic communication apparatus 700 according to an embodiment of this application. The apparatus 700 includes a transceiver unit 710 and a processing unit 720.

In a possible design, the apparatus 600 may be a reasoning plane function network element, or may be a chip in the reasoning plane function network element.

The transceiver unit 710 is configured to receive second information from an access and mobility management function network element. The second information includes resource configuration information for performing semantic communication between a first terminal device and a second terminal device, a key required for configuring a computing environment, and a session identifier between the first terminal device and the second terminal device, and the resource configuration information indicates a configured resource. The processing unit 720 is configured to initialize a trusted execution environment TEE of a computing node and/or a TEE of a storage node based on the second information by using the key.

Optionally, the resource configuration information includes an identifier of a configured computing node and/or an identifier of a configured storage node.

Optionally, the second information carries a plurality of second public keys and resource category information corresponding to the plurality of second public keys; and the processing unit 720 is specifically configured to determine, based on the second information, a computing instance corresponding to each of the plurality of second public keys, and a computing node and/or a storage node corresponding to the computing instance. The transceiver unit 710 is further configured to send third information to a resource controller. The third information includes information indicating the plurality of second public keys and computing instance information corresponding to each second public key, and the computing instance information includes an identifier of the computing node and/or an identifier of the storage node.

Optionally, the information indicating the plurality of second public keys is a plurality of third ciphertexts, and the plurality of third ciphertexts are obtained by separately encrypting the plurality of second public keys by using a third private key in a third public-private key pair.

Optionally, the processing unit 720 is further configured to generate the third public-private key pair. The third public-private key pair includes a third public key and the third private key. The transceiver unit 710 is further configured to send the third public key to the resource controller.

Optionally, the transceiver unit 710 is further configured to receive a confirmation message from the resource controller. The confirmation message indicates that the TEE is initialized.

Optionally, the transceiver unit 710 is further configured to: send a data request to the first terminal device, where the data request is used to request to transmit data; and receive an encrypted data flow from the first terminal device; the processing unit 720 is further configured to perform semantic extraction on the data flow based on a semantic library of the first terminal device and a semantic library of the second terminal device, to obtain semantic key information; and the transceiver unit 710 is further configured to send the semantic key information and the session identifier to a user plane function network element.

Optionally, the transceiver unit 710 is further configured to receive semantic key information and the session identifier from a user plane function network element; the processing unit 720 is further configured to perform semantic restoration on the semantic key information based on a semantic library of the first terminal device and a semantic library of the second terminal device, to obtain semantic restoration information; and the transceiver unit 710 is further configured to send the semantic restoration information and the session identifier to the first terminal device.

Optionally, the transceiver unit 710 is further configured to: receive an end notification from the first terminal device, where the end notification indicates that semantic communication between the first terminal device and the second terminal device ends; and send a resource release notification to the resource controller.

In another possible design, the apparatus 600 may be a resource controller, or may be a chip in the resource controller.

The transceiver unit 710 is configured to receive a resource configuration indication from an access and mobility management function network element, where the resource configuration indication indicates to perform resource reservation and resource instantiation configuration; the processing unit 720 is configured to perform resource reservation and resource instantiation configuration based on the resource configuration indication; and the transceiver unit 710 is further configured to send resource configuration information to the access and mobility management function network element, where the resource configuration information indicates a configured resource.

Optionally, the transceiver unit 710 is further configured to receive third information from a reasoning plane function network element, where the third information includes information indicating a plurality of second public keys required for configuring a computing environment and computing instance information corresponding to each of the plurality of second public keys, and the computing instance information includes an identifier of a computing node and/or an identifier of a storage node; and the processing unit 720 is further configured to initialize a trusted execution environment TEE of the computing node and/or a TEE of the storage node based on the third information by using the plurality of second public keys.

Optionally, the information indicating the plurality of second public keys required for configuring the computing environment is a plurality of third ciphertexts, and the plurality of third ciphertexts are obtained by separately encrypting the plurality of second public keys by using a third private key in a third public-private key pair. The transceiver unit 710 is further configured to receive a third public key from the reasoning plane function network element. The processing unit 720 is further configured to separately decrypt the plurality of third ciphertexts by using the third public key, to obtain the plurality of second public keys.

Optionally, the transceiver unit 710 is further configured to receive a resource release notification from the reasoning plane function network element; and the processing unit 720 is further configured to perform a resource release based on the resource release notification.

It should be understood that the apparatus 700 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described function. In an optional example, a person skilled in the art may understand that the apparatus 700 may be specifically the reasoning plane function network element or the resource controller in the foregoing embodiments, and the apparatus 700 may be configured to perform procedures and/or steps corresponding to the reasoning plane function network element or the resource controller in the foregoing method embodiments. To avoid repetition, details are not described herein again.

The apparatus 700 in the foregoing solution has a function of implementing corresponding steps performed by the reasoning plane function network element or the resource controller in the foregoing method. The function may be implemented by hardware, or by hardware executing corresponding software. The hardware or the software includes one or more modules corresponding to the foregoing function. For example, the transceiver unit 710 may include a sending unit and a receiving unit. The sending unit may be configured to implement steps and/or procedures that correspond to the transceiver unit and that are used to perform a sending action. The receiving unit may be configured to implement steps and/or procedures that correspond to the transceiver unit and that are used to perform a receiving action. The sending unit may be replaced by a transmitter, and the receiving unit may be replaced by a receiver, to respectively perform sending and receiving operations and related processing operations in the method embodiments.

In this embodiment of this application, the apparatus 700 in FIG. 7 may alternatively be a chip or a chip system, for example, a system on chip (system on chip, SoC). Correspondingly, the transceiver unit 710 may be a transceiver circuit of the chip. This is not limited herein.

FIG. 8 shows another communication apparatus 800 according to an embodiment of this application. The apparatus 800 includes a processor 810, a transceiver 820, and a storage 830. The processor 810, the transceiver 820, and the storage 830 communicate with each other through an internal connection channel. The storage 830 is configured to store instructions. The processor 810 is configured to execute the instructions stored in the storage 830, to control the transceiver 820 to send a signal and/or receive a signal.

It should be understood that the apparatus 800 may be specifically the first terminal device, the access and mobility management function network element, the reasoning plane function network element, or the resource controller in the foregoing embodiments, and may be configured to perform steps and/or procedures corresponding to the first terminal device, the access and mobility management function network element, the reasoning plane function network element, or the resource controller in the foregoing method embodiments. Optionally, the storage 830 may include a read-only memory and a random access memory, and provide instructions and data to the processor. A part of the storage may further include a nonvolatile random access memory. For example, the storage may further store information about a device type. The processor 810 may be configured to execute the instructions stored in the storage. When the processor 810 executes the instructions stored in the storage, the processor 810 is configured to perform the steps and/or procedures corresponding to the first terminal device, the access and mobility management function network element, the reasoning plane function network element, or the resource controller in the foregoing method embodiments. The transceiver 820 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that, in embodiments of this application, the processor of the foregoing apparatus may be a central processing unit (central processing unit, CPU). Alternatively, the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor, or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the storage, and a processor reads instructions in the storage and completes the steps in the foregoing methods in combination with hardware of the processor. To avoid repetition, details are not described herein again.

This application further provides a semantic communication system, including one or more of the first terminal device, the access and mobility management function network element, the reasoning plane function network element, and the resource controller.

This application further provides a computer-readable storage medium. The computer-readable storage medium is configured to store a computer program. The computer program is used to implement the method corresponding to the first terminal device, the access and mobility management function network element, the reasoning plane function network element, or the resource controller in the foregoing embodiments.

This application further provides a computer program product. The computer program product includes a computer program (which may also be referred to as code or instructions). When the computer program runs on a computer, the computer may perform the method corresponding to the first terminal device, the access and mobility management function network element, the reasoning plane function network element, or the resource controller in the foregoing embodiments.

A person of ordinary skill in the art may be aware that, in combination with the examples described in embodiments disclosed in this specification, method steps and units may be implemented by electronic hardware, computer software, or a combination thereof. To clearly describe the interchangeability between the hardware and the software, the foregoing has usually described steps and compositions of each embodiment according to functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or the part contributing to the conventional technology, or all or some of the technical solutions may be represented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A semantic communication method, applied to a first terminal device, wherein the method comprises:
sending a resource configuration request to an access and mobility management function network element, wherein the resource configuration request is used to request to configure a semantic communication resource between the first terminal device and a second terminal device;
receiving a response message from the access and mobility management function network element, wherein the response message indicates whether the semantic library is available; and
sending first information to the access and mobility management function network element when the semantic library is available, wherein the first information carries a key required for configuring a computing environment and a session identifier between the first terminal device and the second terminal device.

2. The method according to claim 1, wherein the method further comprises:
receiving a data request from a reasoning plane function network element, wherein the data request is used to request to transmit data; and
sending an encrypted data flow to the reasoning plane function network element based on the data request.

3. The method according to claim 2, wherein the data request carries the session identifier and an identifier of the semantic library, and the encrypted data flow carries the session identifier.

4. The method according to claim 2 or 3, wherein the method further comprises:
receiving semantic key information and the session identifier from the reasoning plane function network element; and
sending the semantic key information and the session identifier to a user plane function network element.

5. The method according to claim 1, wherein the method further comprises:
receiving semantic restoration information and the session identifier from a reasoning plane function network element.

6. The method according to any one of claims 1 to 5, wherein the method further comprises:
sending an end notification to the reasoning plane function network element, wherein the end notification indicates that semantic communication between the first terminal device and the second terminal device ends.

7. The method according to any one of claims 1 to 6, wherein the resource configuration request carries at least one of the following:
a semantic communication type between the first terminal device and the second terminal device; or
description information of a computing resource and a storage resource that are required for performing semantic communication between the first terminal device and the second terminal device; or
an identifier of the first terminal device and an identifier of the second terminal device.

8. The method according to any one of claims 1 to 7, wherein the resource configuration request carries a first public key in a first public-private key pair used for semantic communication; and
the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment.

9. The method according to claim 8, wherein the method further comprises:
generating the first public-private key pair, wherein the first public-private key pair comprises the first public key and the first private key; and
generating a plurality of second public-private key pairs, wherein each of the plurality of second public-private key pairs comprises the second public key and a second private key.

10. A semantic communication method, applied to an access and mobility management function network element, wherein the method comprises:
receiving a resource configuration request from a first terminal device, wherein the resource configuration request is used to request to configure a semantic communication resource between the first terminal device and a second terminal device;
sending a resource configuration indication to a resource controller in response to the resource configuration request, wherein the resource configuration indication indicates to perform resource reservation and resource instantiation configuration;
receiving resource configuration information from the resource controller, wherein the resource configuration information indicates a configured resource;
receiving first information from the first terminal device, wherein the first information carries a key required for configuring a computing environment and a session identifier between the first terminal device and the second terminal device; and
sending second information to a reasoning plane function network element, wherein the second information comprises the resource configuration information, the key required for configuring the computing environment, and the session identifier.

11. The method according to claim 10, wherein the resource configuration information comprises an identifier of a configured computing node and/or an identifier of a configured storage node.

12. The method according to claim 10 or 11, wherein the method further comprises:
sending a query request to a semantic library storage device, wherein the query request is used to request to query a semantic library of the first terminal device and a semantic library of the second terminal device;
receiving a query response from the semantic library storage device, wherein the query response indicates whether the semantic library is available; and
sending a response message to the first terminal device, wherein the response message indicates whether the semantic library is available.

13. The method according to claim 12, wherein sending the resource configuration indication to the resource controller in response to the resource configuration request comprises:
sending the resource configuration indication to the resource controller based on the resource configuration request when the semantic library is available.

14. The method according to any one of claims 10 to 13, wherein the resource configuration request carries a first public key in a first public-private key pair used for semantic communication;
the first information carries a plurality of first ciphertexts and resource category information that corresponds to second public keys corresponding to the plurality of first ciphertexts, and the plurality of first ciphertexts are obtained by separately encrypting, by using a first private key in the first public-private key pair, the plurality of second public keys required for configuring the computing environment; and
the second information carries the plurality of second public keys and resource category information corresponding to the plurality of second public keys; and
the method further comprises:
separately decrypting the plurality of first ciphertexts by using the first public key, to obtain the plurality of second public keys.

15. A semantic communication method, applied to a reasoning plane function network element, wherein the method comprises:
receiving second information from an access and mobility management function network element, wherein the second information comprises resource configuration information for performing semantic communication between a first terminal device and a second terminal device, a key required for configuring a computing environment, and a session identifier between the first terminal device and the second terminal device, and the resource configuration information indicates a configured resource; and
initializing a trusted execution environment TEE of a computing node and/or a TEE of a storage node based on the second information by using the key.

16. The method according to claim 15, wherein the resource configuration information comprises an identifier of a configured computing node and/or an identifier of a configured storage node.

17. The method according to claim 15 or 16, wherein the second information carries a plurality of second public keys and resource category information corresponding to the plurality of second public keys; and
initializing the trusted execution environment TEE of the computing node and/or the TEE of the storage node based on the second information by using the key comprises:
determining, based on the second information, a computing instance corresponding to each of the plurality of second public keys, and a computing node and/or a storage node corresponding to the computing instance; and
sending third information to a resource controller, wherein the third information comprises information indicating the plurality of second public keys and computing instance information corresponding to each second public key, and the computing instance information comprises an identifier of the computing node and/or an identifier of the storage node.

18. The method according to claim 17, wherein the information indicating the plurality of second public keys is a plurality of third ciphertexts, and the plurality of third ciphertexts are obtained by separately encrypting the plurality of second public keys by using a third private key in a third public-private key pair.

19. The method according to claim 18, wherein the method further comprises:
generating the third public-private key pair, wherein the third public-private key pair comprises a third public key and the third private key; and
sending the third public key to the resource controller.

20. The method according to any one of claims 17 to 19, wherein the method further comprises:
receiving a confirmation message from the resource controller, wherein the confirmation message indicates that the TEE is initialized.

21. The method according to any one of claims 15 to 20, wherein the method further comprises:
sending a data request to the first terminal device, wherein the data request is used to request to transmit data;
receiving an encrypted data flow from the first terminal device;
performing semantic extraction on the data flow based on a semantic library of the first terminal device and a semantic library of the second terminal device, to obtain semantic key information; and
sending the semantic key information and the session identifier to a user plane function network element.

22. The method according to any one of claims 15 to 20, wherein the method further comprises:
receiving semantic key information and the session identifier from a user plane function network element;
performing semantic restoration on the semantic key information based on a semantic library of the first terminal device and a semantic library of the second terminal device, to obtain semantic restoration information; and
sending the semantic restoration information and the session identifier to the first terminal device.

23. The method according to any one of claims 15 to 22, wherein the method further comprises:
receiving an end notification from the first terminal device, wherein the end notification indicates that semantic communication between the first terminal device and the second terminal device ends; and
sending a resource release notification to the resource controller.

24. A semantic communication method, applied to a resource controller, wherein the method comprises:
receiving a resource configuration indication from an access and mobility management function network element, wherein the resource configuration indication indicates to perform resource reservation and resource instantiation configuration;
performing resource reservation and resource instantiation configuration based on the resource configuration indication; and
sending resource configuration information to the access and mobility management function network element, wherein the resource configuration information indicates a configured resource.

25. The method according to claim 24, wherein the method further comprises:
receiving third information from a reasoning plane function network element, wherein the third information comprises information indicating a plurality of second public keys required for configuring a computing environment and computing instance information corresponding to each of the plurality of second public keys, and the computing instance information comprises an identifier of a computing node and/or an identifier of a storage node; and
initializing a trusted execution environment TEE of the computing node and/or a TEE of the storage node based on the third information by using the plurality of second public keys.

26. The method according to claim 25, wherein the information indicating the plurality of second public keys required for configuring the computing environment is a plurality of third ciphertexts, and the plurality of third ciphertexts are obtained by separately encrypting the plurality of second public keys by using a third private key in a third public-private key pair; and
the method further comprises:
receiving a third public key from the reasoning plane function network element; and
separately decrypting the plurality of third ciphertexts by using the third public key, to obtain the plurality of second public keys.

27. The method according to any one of claims 24 to 26, wherein the method further comprises:
receiving a resource release notification from the reasoning plane function network element; and
performing a resource release based on the resource release notification.

28. A semantic communication apparatus, comprising a unit configured to implement the method according to any one of claims 1 to 27.

29. A semantic communication apparatus, comprising a processor, wherein the processor is coupled to a storage, the storage is configured to store a computer program, and when the processor invokes the computer program, the apparatus is enabled to perform the method according to any one of claims 1 to 27.

30. A computer-readable storage medium, configured to store a computer program, wherein the computer program comprises instructions used to implement the method according to any one of claims 1 to 27.

31. A computer program product, wherein the computer program product comprises instructions, and when the instructions are run on a computer, the computer is enabled to perform the method according to any one of claims 1 to 27.
